# EUROPEAN PATENT APPLICATION

(11) **EP 4 580 178 A1**
(43) Date of publication of application: **02.07.2025**
(21) Application number: 23856329.0
(22) Date of filing: 07.07.2023
(51) Int. Cl.: H04N 13/161, H04N 13/282, H04N 19/597

(54) **DATA PROCESSING METHOD AND APPARATUS FOR IMMERSIVE MEDIA, DEVICE, STORAGE MEDIUM, AND PROGRAM PRODUCT**

(30) Priority: 22.08.2022 CN 202211008936
(71) Applicant: Tencent Technology (Shenzhen) Company Limited, Shenzhen, Guangdong 518057 (CN)
(72) Inventor: HU, Ying, Shenzhen, Guangdong 518057 (CN); ZHU, Wenjie, Shenzhen, Guangdong 518057 (CN)
(74) Representative: Nederlandsch Octrooibureau
(86) International application number: PCT/CN2023/106305
(87) International publication number: WO 2024/041239

(57) **Abstract**

Embodiments of this application disclose an immersive media data processing method and apparatus, a device, a storage medium, and a program product. The method includes: obtaining a media file resource of immersive media; decapsulating the media file resource to obtain a point cloud bitstream, the point cloud bitstream including a plurality of point cloud frames and point cloud slice indication information, the point cloud slice indication information indicating each of M point cloud slices included in a point cloud frame, and M being a positive integer; and decoding the point cloud bitstream based on the point cloud slice indication information.

## Description

### RELATED APPLICATION

This application is proposed based on Chinese Patent Application No. 202211008936.X, filed on August 22, 2022, and claims priority to the Chinese Patent, which is incorporated by reference in its entirety.

### FIELD OF THE TECHNOLOGY

This application relates to the field of communication technologies, and in particular, to an immersive media data processing method and apparatus, a device, and a storage medium.

### BACKGROUND OF THE DISCLOSURE

Immersive media is media content that delivers an immersive experience to a business object. Point cloud media is typical immersive media. In the related art, although division of point cloud slices is supported and the point cloud slices are identified, a scenario of a plurality of point cloud slices existing in one point cloud frame and how to identify different point cloud slices in this scenario are not considered. In this case, encoding and file encapsulation based on the point cloud slices cannot be fully supported, consequently affecting decoding and presentation efficiency of point cloud media.

### SUMMARY

Embodiments of this application provide an immersive media data processing method and apparatus, a device, a storage medium, and a program product, which can implement encoding and file encapsulation based on point cloud slices, and improve decoding and presentation efficiency of point cloud media.

According to an aspect of the embodiments of this application, an immersive media data processing method is provided and is performed by a computer device, and the method includes:
obtaining a media file resource of immersive media; decapsulating the media file resource to obtain a point cloud bitstream, the point cloud bitstream including a plurality of point cloud frames and point cloud slice indication information, the point cloud slice indication information indicating each of M point cloud slices included in a point cloud frame, and M being a positive integer; and
decoding the point cloud bitstream based on the point cloud slice indication information.

According to an aspect of the embodiments of this application, an immersive media data processing method is provided and includes:
encoding point cloud data to obtain a point cloud bitstream, the point cloud bitstream including a plurality of point cloud frames and point cloud slice indication information, the point cloud slice indication information indicating each of M point cloud slices included in a point cloud frame, and M being a positive integer; and
encapsulating the point cloud bitstream based on the point cloud slice indication information into a media file resource of immersive media.

According to an aspect of the embodiments of this application, an immersive media data processing apparatus is provided and includes:
a decapsulation module, configured to obtain a media file resource of immersive media, and decapsulate the media file resource to obtain a point cloud bitstream, the point cloud bitstream including a plurality of point cloud frames and point cloud slice indication information, the point cloud slice indication information indicating each of M point cloud slices included in a point cloud frame, and M being a positive integer; and
a decoding module, configured to decode the point cloud bitstream based on the point cloud slice indication information.

According to an aspect of the embodiments of this application, a computer device is provided and includes: a processor and a memory,
the processor being connected to the memory, the memory being configured to store a computer program, and the computer program being executed by the processor, to enable the computer device to perform the method provided in the embodiments of this application.

According to an aspect of the embodiments of this application, a computer-readable storage medium is provided, the computer-readable storage medium storing a computer program, and the computer program being adapted to be loaded and executed by a processor, to enable a computer device with the processor to perform the method provided in the embodiments of this application.

According to an aspect of the embodiments of this application, a computer program product or a computer program is provided. The computer program product or the computer program includes computer instructions. The computer instructions are stored in a computer-readable storage medium. A processor of a computer device reads the computer instructions from the computer-readable storage medium. The processor executes the computer instructions to enable the computer device to perform the method provided in the embodiments of this application.

In the embodiments of this application, after a media file resource of immersive media is obtained, the media file resource may be first decapsulated to obtain a corresponding point cloud bitstream, where the point cloud bitstream carries point cloud slice indication information, and then the point cloud bitstream may be decoded based on the point cloud slice indication information. As the point cloud slice indication information can indicate each of M point cloud slices included in a point cloud frame in the point cloud bitstream, different point cloud slices in different point cloud frames can be effectively differentiated, so that encoding and file encapsulation based on the point cloud slices can be implemented. In addition, in the embodiments of this application, decoding, transmission, and presentation of point cloud media can be better guided based on the point cloud slices, thereby improving decoding and presentation efficiency of the point cloud media.

### BRIEF DESCRIPTION OF THE DRAWINGS

To describe technical solutions in the embodiments of this application or in the related art more clearly, the following briefly introduces the accompanying drawings required for describing the embodiments or the related art. Apparently, the accompanying drawings in the following description show only some embodiments of this application, and a person of ordinary skill in the art may still derive other drawings from these accompanying drawings without creative efforts.
FIG. 1a is a schematic diagram of three degrees of freedom (3DoF) according to an embodiment of this application.
FIG. 1b is a schematic diagram of 3DoF+ according to an embodiment of this application.
FIG. 1c is a schematic diagram of six degrees of freedom (6DoF) according to an embodiment of this application.
FIG. 2 is a schematic flowchart of immersive media from collection to consumption according to an embodiment of this application.
FIG. 3 is a schematic diagram of an architecture of an immersive media system according to an embodiment of this application.
FIG. 4 is a schematic flowchart of an immersive media data processing method according to an embodiment of this application.
FIG. 5 is a schematic flowchart of an immersive media data processing method according to an embodiment of this application.
FIG. 6 is a schematic diagram of an immersive media data processing scenario according to an embodiment of this application.
FIG. 7 is a schematic diagram of a structure of an immersive media data processing apparatus according to an embodiment of this application.
FIG. 8 is a schematic diagram of a structure of an immersive media data processing apparatus according to an embodiment of this application.
FIG. 9 is a schematic diagram of a structure of a computer device according to an embodiment of this application.
FIG. 10 is a schematic diagram of a structure of a data processing system according to an embodiment of this application.

### DESCRIPTION OF EMBODIMENTS

The technical solutions in the embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

The following describes some technical terms involved in the embodiments of this application:

### 1. Immersive media:

Immersive media refers to a media file that can provide immersive media content, so that a business object immersed in the media content can get real-world sensory experiences such as a visual experience and an auditory experience. Immersive media may be classified into 3DoF media, 3DoF+ media, and 6DoF media based on a degree of freedom (DoF) of a business object when consuming media content. Point cloud media is typical 6DoF media. In the embodiments of this application, a user that consumes immersive media (for example, point cloud media) may be referred to as a business object.

### 2. Point cloud:

A point cloud is a set of irregularly distributed discrete points in space that expresses a spatial structure and a surface attribute of a three-dimensional object or scene. Each point in the point cloud has at least three-dimensional position information, and may also have color, material, or other information based on different application scenarios. Usually, each point in the point cloud has the same number of additional attributes.

The point cloud can flexibly and conveniently express a spatial structure and a surface attribute of a three-dimensional object or scene, and is therefore widely applied to virtual reality (VR) gaming, computer aided design (CAD), geography information systems (GISs), autonomous navigation systems (ANSs), digital cultural heritage, free-viewpoint broadcasting, three-dimensional immersive telepresence, three-dimensional reconstruction of biological tissues and organs, and the like.

A point cloud is obtained mainly in the following ways: generation by computers, 3-dimension (3D) laser scanning, and 3D photogrammetry. A computer can generate point clouds of a virtual 3D object and scene. By 3D scanning, a million-level point cloud of a static real-world 3D object or scene can be obtained per second. By 3D photogrammetry, a ten million-level point cloud of a dynamic real-world 3D object or scene can be obtained per second. In addition, in the medical field, point clouds of a biological tissue and organ can be obtained by magnetic resonance imaging (MRI), computed tomography (CT), and electromagnetic positioning information. These techniques reduce costs and time cycles for obtaining point cloud data, and improve data precision. Changes in manners of obtaining point cloud data make it possible to obtain a large volume of point cloud data. With continuous accumulation of large-scale point cloud data, efficient storage, transmission, distribution, sharing, and standardization of point cloud data become the key to point cloud applications.

### 3. Track:

A track is a media data set in a media file encapsulation process, including a plurality of time sequential samples. One media file may include one or more tracks. Commonly, for example, one media file may include one video media track, one audio media track, and one subtitle media track. In particular, metadata information may also be included in a file as a media type in a form of a metadata media track.

### 4. Sample:

A sample is an encapsulation unit in a media file encapsulation process. One track includes many samples. Each sample corresponds to specific timestamp information. For example, one video media track may include many samples, and one sample is usually one video frame. In another example, one sample in a point cloud media track may be one point cloud frame.

Sample number: a number of a specific sample. A number of the first sample in a track is 1.
5. Sample entry: indicating metadata information related to all samples in a track. For example, a sample entry of a video track usually includes metadata information related to decoder initialization.
6. Sample group: for grouping some samples in a track based on a specific rule.
7. Point cloud slice: indicating a series of syntactic element (such as geometry slice or attribute slice) sets of partially or fully encoded point cloud frame data.
8. Point cloud tile: a hexahedral spatial tile region in a point cloud frame boundary spatial region. One point cloud tile includes one or more point cloud slices. There is no encoding/decoding dependency relationship between point cloud tiles.
9. Point cloud sequence header parameter set: A point cloud sequence header parameter set is a parameter set required for point cloud sequence decoding, which may also be referred to as a sequence header for short.
10. Point cloud frame geometry header parameter set: a parameter set required for single-frame point cloud geometry data decoding, which may also be referred to as a geometry header for short.
11. Point cloud frame attribute header parameter set: a parameter set required for single-frame point cloud attribute data decoding, which may also be referred to as an attribute header for short.
12. DoF:
   a degree of freedom for a business object to support motion and generate content interaction while viewing immersive media (for example, point cloud media), including 3DoF, 3DoF+, and 6DoF. 3DoF is three degrees of freedom for a head of a business object to rotate around an x axis, a y axis, and a z axis. 3DoF+ is a degree of freedom of limited motion for a business object along an x axis, a y axis, and a z axis based on three degrees of freedom. 6DoF is a degree of freedom of free motion for a business object along an x axis, a y axis, and a z axis based on three degrees of freedom.
13. International Standard Organization (ISO) based media file format (ISOBMFF): an encapsulation standard for media files. A typical ISOBMFF file is a moving picture experts group 4 (MP4) file.
14. Dynamic adaptive streaming over hyper text transfer protocol (HTTP, DASH): an adaptive bitrate technique that enables high-quality streaming media to be delivered over the Internet through a conventional HTTP network server.
15. Media presentation description (MPD) signaling in DASH, for describing media fragment information in a media file.
16. Representation: a combination of one or more media components in DASH. For example, a video file of a resolution may be considered as a representation.
17. Adaptation set: a set of one or more video streams in DASH. One adaptation set may include a plurality of representations.
18. Media segment: a segment that conforms to a particular media format and that is playable, which may need to be played in conjunction with zero or more previous segments and an initialization segment.

The embodiments of this application relate to an immersive media data processing technique. The following describes some concepts in an immersive media data processing process. In particular, the subsequent embodiments of this application are described by using an example in which immersive media is point cloud media.

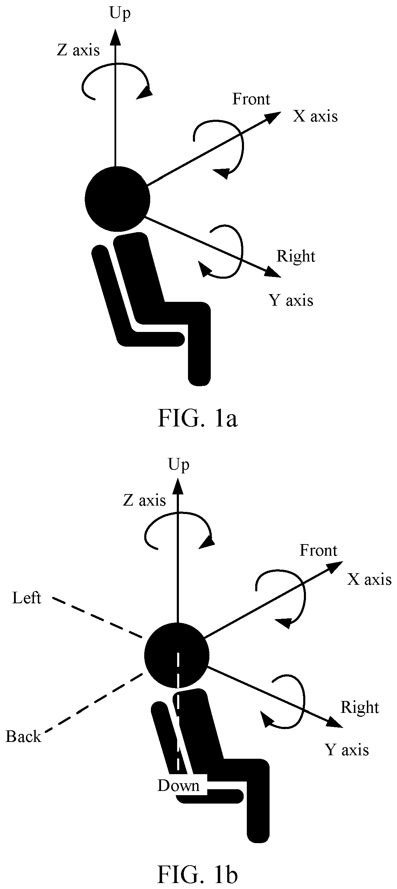

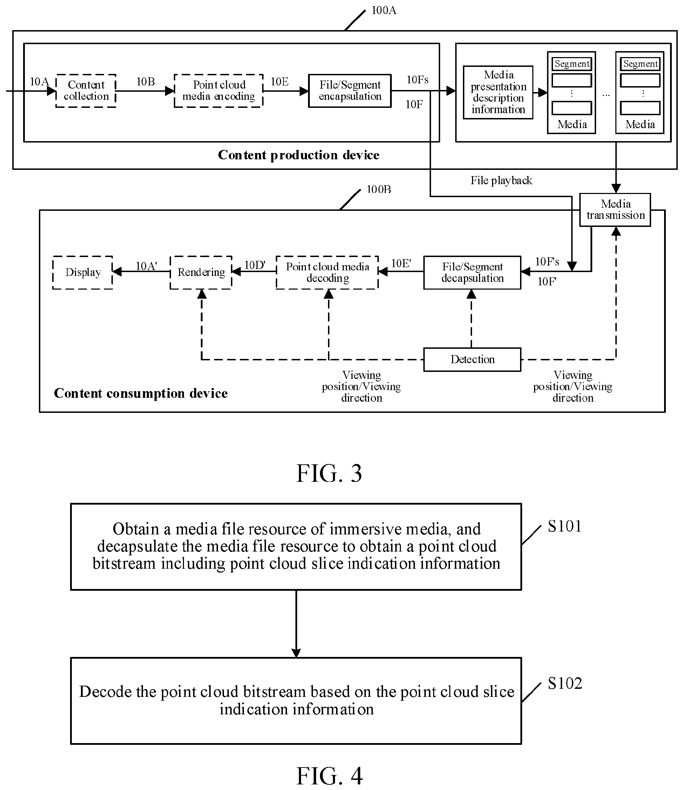

Refer to FIG. 1a. FIG. 1a is a schematic diagram of 3DoF according to an embodiment of this application. As shown in FIG. 1a, 3DoF indicates that a business object that consumes immersive media is fixed at a center point in three-dimensional space, and a head of the business object rotates around the X axis, the Y axis, and the Z axis to view a picture provided by media content.

Refer to FIG. 1b. FIG. 1b is a schematic diagram of 3DoF+ according to an embodiment of this application. As shown in FIG. 1b, 3DoF+ indicates that when a virtual scene provided by immersive media has depth information, a head of a business object may move in limited space based on 3DoF to view a picture provided by media content.

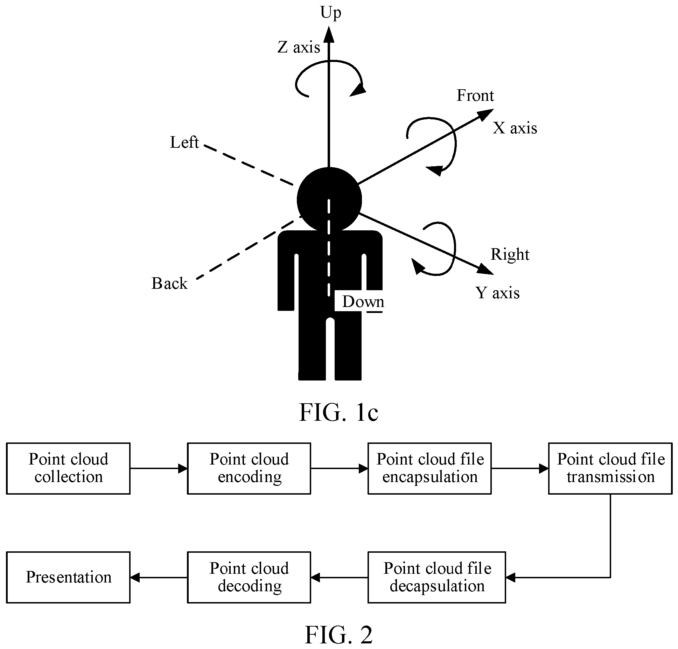

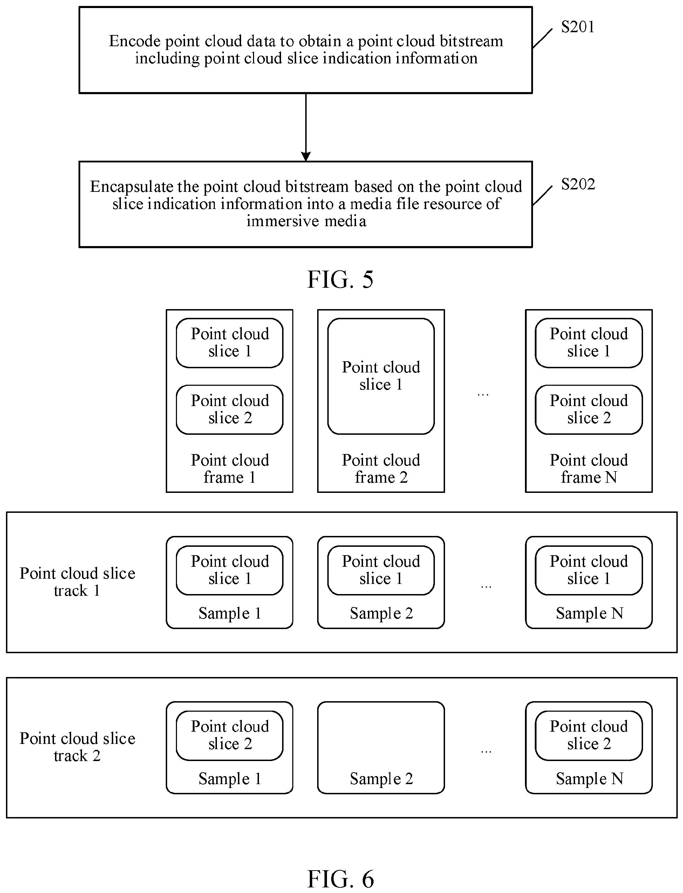

Refer to FIG. 1c. FIG. 1c is a schematic diagram of 6DoF according to an embodiment of this application. As shown in FIG. 1c, 6DoF includes window 6DoF, omni-directional 6DoF, and 6DoF. The window 6DoF indicates that a business object is limited in rotational movement in the X axis and the Y axis and is limited in translational movement in the Z axis. For example, the business object cannot see a scene out of a window frame, and the business object cannot move through the window. The omni-directional 6DoF indicates that a business object is limited in rotational movement in the X axis, the Y axis, and the Z axis. For example, the business object is not free to move through three-dimensional 360-degree VR content in a limited movement region. The 6DoF indicates that a business object is free to translationally move along the X axis, the Y axis, and the Z axis based on 3DoF. For example, the business object is free to move in three-dimensional 360-degree VR content.

Refer to FIG. 2. FIG. 2 is a schematic flowchart of immersive media from collection to consumption according to an embodiment of this application. As shown in FIG. 2, using point cloud media as an example, a complete processing process for immersive media may specifically include: point cloud collection, point cloud encoding, point cloud file encapsulation, point cloud file transmission, point cloud file decapsulation, point cloud decoding, and final video presentation.

The point cloud collection is to convert, into binary digital information, point cloud data collected by a plurality of cameras from different angles. The binary digital information obtained through conversion from the point cloud data is a binary data stream. The binary digital information may also be referred to as a bitstream of the point cloud data. The point cloud encoding is to convert a file of an original video format into a file of another video format through a compression technique. In terms of obtaining point cloud data, the point cloud data may be captured by a camera or generated by a computer. Different statistical characteristics may correspond to different compression encoding manners. Commonly used compression encoding manners may specifically include the international video encoding standard High Efficiency Video Coding (HEVC)/H.265, the international video encoding standard Versatile Video Coding (VVC)/H.266, the China national video encoding standard Audio Video Coding Standard (AVS), the third-generation video encoding standard introduced by the AVS standard group (AVS3), and the like.

After point cloud encoding, it is necessary to encapsulate an encoded data stream (namely, a point cloud bitstream) and transmit the encoded data stream to a business object. The point cloud file encapsulation is to store an encoded and compressed point cloud bitstream in a file in a particular encapsulation format (or a container or a file container). A commonly used encapsulation format includes an audio video interleaved (AVI) format or an ISOBMFF format. In an embodiment, a point cloud bitstream is encapsulated in a file container in an ISOBMFF file format to form a point cloud file (which may also be referred to as a media file, an encapsulated file, or a video file). The point cloud file may include a plurality of tracks, for example, may include one video track, one audio track, and one subtitle track.

After performing the encoding process and the file encapsulation process, a content production device may transmit the point cloud file to a client on a content consumption device. The client may perform inverse operations such as decapsulation and decoding to present final media content in the client. The point cloud file may be sent to the client based on various transport protocols. The transport protocols may include, but are not limited to: a DASH protocol, a dynamic bit rate adaptive transport (HTTP Live Streaming, HLS) protocol, a smart media transport protocol (SMTP), and a transmission control protocol (TCP).

The file decapsulation process of the client is inverse to the file encapsulation process. The client may decapsulate the point cloud file according to the file encapsulation format requirement, to obtain the point cloud bitstream. The decoding process of the client is also inverse to the encoding process. For example, the client may decode the point cloud bitstream to restore and present the media content.

For ease of understanding, refer to FIG. 3. FIG. 3 is a schematic diagram of an architecture of an immersive media system according to an embodiment of this application. As shown in FIG. 3, the immersive media system may include a content production device (for example, a content production device 100A) and a content consumption device (for example, a content consumption device 100B). The content production device may be a computer device used by a provider of point cloud media (for example, a content producer of point cloud media). The computer device may be a terminal (for example, a personal computer (PC) or a smart mobile device (such as a smartphone)) or a server. The server may be an independent physical server, or may be a server cluster or distributed system including a plurality of physical servers, or may be a cloud server providing basic cloud computing services such as cloud services, cloud databases, cloud computing, cloud functions, cloud storage, network services, cloud communication, middleware services, domain name services, security services, CDN, and big data and artificial intelligence platforms. The content consumption device may be a computer device used by a user of point cloud media (for example, a viewer of point cloud media, namely, a business object). The computer device may be a terminal (such as a PC, a smart mobile device (such as a smartphone), a VR device (such as a VR helmet or VR glasses), a smart home appliance, an on-board terminal, or an aerial vehicle). A client is integrated in the computer device. The client may be a client with a function of displaying data information such as text, images, audio, and videos, and includes, but is not limited to, a multimedia client (for example, a video client), a social client (for example, an instant messaging client), an information application (for example, a news client), an entertainment client (for example, a game client), a shopping client, an on-board client, and a browser. The client may be a standalone client or may be an embedded subclient integrated into a client (for example, a social client). This is not limited herein.

The immersive media data processing technique involved in the embodiments of this application may be implemented based on cloud technology. For example, a cloud server is used as the content production device. Cloud technology refers to a hosting technology that unifies a series of resources such as hardware, software, and network in a wide area network or a local area network, to achieve data computing, storage, processing, and sharing.

A point cloud media data processing process includes a data processing process on the content production device side and a data processing process on the content consumption device side.

The data processing process on the content production device side mainly includes: (1) a process of obtaining and producing media content of the point cloud media; and (2) a process of encoding and file encapsulation of the point cloud media. The data processing process on the content consumption device side mainly includes: (1) a process of file decapsulation and decoding of the point cloud media; and (2) a process of rendering the point cloud media. In addition, a transmission process of the point cloud media is involved between the content production device and the content consumption device. The transmission process may be implemented based on various transport protocols. The transport protocols may include, but are not limited to, the DASH protocol, the HLS protocol, the SMTP protocol, and the TCP protocol.

The processes involved in the point cloud media data processing process are described in detail below with reference to FIG. 3.

### 1. Data processing process on content production device side:

### (1) Process of obtaining and producing media content of point cloud media.

### 1) Process of obtaining media content of point cloud media.

The media content of the point cloud media is obtained by a capture device collecting a real-world sound-visual scene. In an implementation, the capture device may be a hardware component configured in the content production device. For example, the capture device is a microphone, camera, or sensor of a terminal. In another implementation, the capture device may be a hardware apparatus connected to the content production device, for example, a camera connected to a server, for providing a service of obtaining the media content of the point cloud media for the content production device. The capture device may include, but is not limited to: an audio device, a camera device, and a sensing device. The audio device may include an audio sensor, a microphone, and the like. The camera device may include an ordinary camera, a stereo camera, a light-field camera, and the like. The sensing device may include a laser device, a radar device, and the like. There may be a plurality of capture devices. These capture devices are deployed at some specific positions in real space to simultaneously capture audio content and video content from different angles in the space. The captured audio content and video content are synchronized in both time and space. In the embodiments of this application, media content in three-dimensional space that is for providing a multi-degree of freedom (for example, 6DoF) viewing experience and that is collected by a capture device deployed at a specific position may be referred to as point cloud media.

For example, video content of point cloud media is obtained. As shown in FIG. 3, a visual scene 10A (for example, a visual scene in the real world) may be captured by a group of camera arrays connected to the content production device 100A, or may be captured by a camera device that has a plurality of cameras and sensors and that is connected to the content production device 100A. A collection result may be source point cloud data 10B (that is, the video content of the point cloud media). The source point cloud data 10B may be a frame sequence including a large number of data frames.

### 2) Process of producing media content of point cloud media.

The process of producing the media content of the point cloud media involved in the embodiments of this application may be understood as a process of content producing of the point cloud media, and the content producing of the point cloud media is mainly implemented by producing content in a form of point cloud data obtained through capturing by cameras or camera arrays deployed at a plurality of positions. For example, the content production device may convert the point cloud media from a three-dimensional representation to a two-dimensional representation. The point cloud media may include geometry information, attribute information, occupancy map information, atlas data, and the like. The point cloud media usually requires specific processing before encoding. For example, point cloud data needs to be cut and mapped before encoding.

The specific description is as follows: (1) Three-dimensional representation data (namely, the point cloud data) of the collected and inputted point cloud media is projected to a two-dimensional plane, usually by orthogonal projection, perspective projection, or equi-rectangular projection (ERP). The point cloud media projected to the two-dimensional plane is represented by data of a geometry component, an occupancy component, and an attribute component. The data of the geometry component provides position information of each point of the point cloud media in three-dimensional space. The data of the attribute component provides an additional attribute (such as color, texture, or material information) of each point of the point cloud media. The data of the occupancy component indicates whether data in another component is associated with the point cloud media.
(2) Component data of a two-dimensional representation of the point cloud media is processed to generate a tile. A two-dimensional plane region where the two-dimensional representation of the point cloud media is located is divided into a plurality of rectangular regions of different sizes based on positions of the point cloud media that are represented in the geometry component data. One rectangular region is one tile, and the tile includes necessary information for back-projecting the rectangular region to the three-dimensional space.
(3) Tiles are packed to generate an atlas. Tiles are put in a two-dimensional grid, and it is ensured that there is no overlap between valid parts of the tiles. Tiles generated from the point cloud media may be packed into one or more atlases.
(4) Corresponding geometry data, attribute data, and occupancy data are generated based on atlas data. The atlas data, the geometry data, the attribute data, and the occupancy data are combined to form a final representation of the point cloud media in the two-dimensional plane.

In the process of content producing of the point cloud media, the geometry component is mandatory, the occupancy component is conditionally mandatory, and the attribute component is optional.

In addition, as a panoramic video can be captured by the capture device, after the video is processed by the content production device and transmitted to the content consumption device for corresponding data processing, a business object on the content consumption device needs to perform some specific actions (for example, head rotation) to view 360-degree video information, while performing non-specific actions (for example, head moving) cannot cause corresponding video changes, resulting in a poor VR experience. In this case, it is necessary to additionally provide depth information that matches the panoramic video, for the business object to obtain better immersion and a better VR experience, which involves 6DoF production technology. 6DoF is for the business object to move freely in a simulated scene. When the video content of the point cloud media is produced by the 6DoF production technology, the capture device is usually a laser device or a radar device to capture point cloud data in space.

### (2) Process of encoding and file encapsulation of point cloud media.

Captured audio content may be directly configured for audio encoding to form an audio bitstream of the point cloud media. Captured video content may be configured for video encoding to obtain a video bitstream of the point cloud media. If the 6DoF production technology is used, video encoding requires a specific encoding manner (for example, video-based point cloud compression). The audio bitstream and the video bitstream are encapsulated in a file container in a file format (for example, ISOBMFF) of the point cloud media to form a media file resource of the point cloud media. The media file resource may be a media file or a media file of the point cloud media formed by a media fragment. Metadata information (or metadata for short) of the media file resource of the point cloud media is recorded by using media presentation description (MPD) information based on a file format requirement of the point cloud media. The metadata information is a generic term for information related to presentation of the point cloud media. The metadata information may include description information of media content, description information of a window, signaling information related to presentation of media content, and the like. The content production device stores the media presentation description information and the media file resource that are formed through data processing. The media presentation description information may be added to the media file resource and then delivered to the content consumption device.

Specifically, collected audio is encoded into a corresponding audio bitstream, geometry information, attribute information, and occupancy map information of the point cloud media may be encoded in a conventional video encoding manner, and atlas data of the point cloud media may be encoded in an entropy encoding manner. Then, encoded media is encapsulated in a file container in a specific format (such as ISOBMFF or HNSS), and is combined with metadata describing a media content attribute and window metadata to form a media file or to form an initialization segment and a media segment in a specific media file format.

For example, as shown in FIG. 3, the content production device 100A performs point cloud media encoding on one or more data frames in the source point cloud data 10B, for example, by geometry-based point cloud compression (GPCC), to obtain an encoded point cloud bitstream 10E (namely, a video bitstream, for example, a GPCC bitstream), including a geometry bitstream (that is, a bitstream obtained by encoding geometry information) and an attribute bitstream (that is, a bitstream obtained by encoding attribute information). Then, the content production device 100A may encapsulate one or more encoded bitstreams in a specific media file format (for example, ISOBMFF) into a media file 10F for local playback, or into a segment sequence 10Fₛ that includes one initialization segment and a plurality of media segments and that is for streaming. In addition, a file encapsulator in the content production device 100A may also add relevant metadata in the media file 10F or the segment sequence 10Fₛ. Further, the content production device 100A may transmit the segment sequence 10Fₛ or the media file 10F to the content consumption device 100B by using a transmission mechanism (such as DASH or SMT). In some implementations, the content consumption device 100B may be a player.

### 2. Data processing process on content consumption device side:

### (3) Process of file decapsulation and decoding of point cloud media.

The content consumption device may adaptively and dynamically obtain the media file resource and the corresponding media presentation description information of the point cloud media from the content production device through recommendation of the content production device or based on a requirement of the business object on the content consumption device side. For example, the content consumption device may determine a viewing direction and a viewing position of the business object based on head/eye position information of the business object, and then dynamically request the corresponding media file resource from the content production device based on the determined viewing direction and viewing position. The media file resource and the media presentation description information are transmitted from the content production device to the content consumption device by using a transmission mechanism (such as DASH or SMT). The process of file decapsulation on the content consumption device side is inverse to the process of file encapsulation on the content production device. The content consumption device decapsulates the media file resource based on a file format (for example, ISOBMFF) requirement of the point cloud media, to obtain the corresponding audio bitstream and video bitstream. The process of decoding on the content consumption device side is inverse to the process of encoding on the content production device side. The content consumption device performs audio decoding on the audio bitstream to restore audio content. The content consumption device performs video decoding on the video bitstream to restore video content.

For example, as shown in FIG. 3, the media file 10F outputted by the file encapsulator in the content production device 100A is the same as a media file 10F' inputted to a file decapsulator in the content consumption device 100B. The file decapsulator performs file decapsulation on the media file 10F' or a received segment sequence 10F'ₛ and extracts an encoded point cloud bitstream 10E'. Corresponding metadata is parsed. Then, point cloud media decoding may be performed on the point cloud bitstream 10E' to obtain a decoded video signal 10D', and point cloud data may be generated from the video signal 10D' (that is, video content is restored). The media file 10F and the media file 10F' may include a track format definition, which may include a constraint on an underlying stream included in a sample in a track.

### (4) Process of rendering point cloud media.

The content consumption device renders, based on rendering-related metadata in the media presentation description information corresponding to the media file resource, audio content obtained through audio decoding and video content obtained through video decoding, to play and output the content.

The immersive media system supports a data box. The data box is a data block or object that includes metadata, that is, the data box includes metadata of corresponding media content. During actual application, the content production device may guide the content consumption device through the data box to consume the media file of the point cloud media. The point cloud media may include a plurality of data boxes, for example, include an ISOBMFF box that includes metadata for describing corresponding information in file encapsulation, for example, that may specifically include point cloud slice information related to each track for file encapsulation based on point cloud slices.

For example, as shown in FIG. 3, the content consumption device 100B may render the generated point cloud data based on a current viewing position and viewing direction or window, and display the rendered point cloud data on a screen of a head-mounted display or any other display device. The current window may be determined by various sensors. For example, the sensors may include a head detection sensor, a position detection sensor, and an eye detection sensor. Except an appropriate part for the content consumption device 100B to obtain the decoded point cloud data, partially accessed and decoded point cloud data based on the current viewing position or viewing direction may be configured for optimizing a media processing process. In addition, in a window-based transmission process, the current viewing position and viewing direction are also transmitted to a policy module in the content consumption device 100B. The policy module may determine a to-be-received track based on the current viewing position and viewing direction.

Based on the above, the content consumption device may dynamically obtain a media file resource corresponding to the point cloud media from the content production device side. The media file resource is obtained by encoding and encapsulating captured audio and video content by the content production device. In this case, after receiving the media file resource returned by the content production device, the content consumption device needs to first decapsulate the media file resource to obtain corresponding audio and video bitstreams, then decode the audio and video bitstreams, and finally present decoded audio and video content to the business object. The point cloud media may include, but is not limited to, video-based point cloud compression (VPCC) point cloud media and GPCC point cloud media.

A point cloud sequence is the highest-level syntactic structure of a point cloud bitstream. A point cloud sequence starts with sequence header information (sequence header for short) and is followed by one or more point cloud frames. Each point cloud frame may include geometry header information (geometry header for short), attribute header information (attribute header for short), and one or more point cloud slices. The point cloud slice includes a geometry slice header, geometry data, an attribute slice header, and attribute data. When one point cloud frame includes a plurality of point cloud slices, the plurality of point cloud slices cannot be identified and distinguished by a point cloud slice indication method in the related art. Based on this, this application provides a method for encoding and encapsulating a point cloud slice, which can better guide decoding, transmission, and presentation of point cloud media. Specifically, the content production device may encode obtained point cloud data to obtain a point cloud bitstream including point cloud slice indication information. The point cloud slice indication information may indicate each of M point cloud slices included in a point cloud frame in the current point cloud bitstream, where M is a positive integer. In other words, even when a point cloud frame includes a plurality of (M > 1) point cloud slices, different point cloud slices can be effectively distinguished. Further, the content production device may encapsulate the point cloud bitstream based on the point cloud slice indication information into a media file resource of immersive media, and transmit the media file resource to the content consumption device. Correspondingly, the content consumption device may decapsulate the obtained media file resource to obtain the point cloud bitstream including the point cloud slice indication information, then may decode the obtained point cloud bitstream based on the point cloud slice indication information, and finally may present decoded point cloud data. This application can support a scenario in which a single point cloud frame includes a plurality of point cloud slices, to implement encoding and file encapsulation based on the point cloud slices. Correspondingly, the content consumption device can decode the corresponding point cloud slices based on a requirement of a business object and the point cloud slice indication information, to implement partial decoding, thereby improving decoding and presentation efficiency of the point cloud media.

The method provided in the embodiments of this application is applicable to a server side (namely, the content production device side), a player side (namely, the content consumption device side), and an intermediate node (such as a smart media transport (SMT) receiving entity or SMT sending entity) of the immersive media system. For a specific process in which the content production device encodes the point cloud data to obtain the point cloud bitstream including the point cloud slice indication information and encapsulates the point cloud bitstream based on the point cloud slice indication information into the media file resource, and for a specific process in which the content consumption device decapsulates the media file resource to obtain the corresponding point cloud bitstream and decodes the point cloud bitstream based on the included point cloud slice indication information, refer to the following descriptions of embodiments corresponding to FIG. 4 to FIG. 6.

Further, refer to FIG. 4. FIG. 4 is a schematic flowchart of an immersive media data processing method according to an embodiment of this application. The method may be performed by a content consumption device (for example, the content consumption device 100B in the embodiment corresponding to FIG. 3) in an immersive media system. For example, the content consumption device may be a client. This embodiment of this application is described by using a client as an example. The method may include at least the following operations S101 and S102:

S101: Obtain a media file resource of immersive media, and decapsulate the media file resource to obtain a point cloud bitstream.

Specifically, a server may encapsulate a point cloud bitstream including point cloud slice indication information to obtain a media file resource, and may send the obtained media file resource to the client for consumption. Correspondingly, the client may obtain the media file resource and decapsulate the media file resource to obtain the corresponding point cloud bitstream. The point cloud bitstream includes a plurality of point cloud frames and the point cloud slice indication information. The point cloud slice indication information indicates each of M point cloud slices included in a point cloud frame in the point cloud bitstream, where M is a positive integer. A number of the point cloud frames and a number of point cloud slices included in each point cloud frame are not limited herein. In this embodiment of this application, each point cloud slice has corresponding point cloud slice indication information. For example, using an m^{th} point cloud slice in the M point cloud slices as an example (where m is a positive integer less than or equal to M), point cloud slice indication information corresponding to the m^{th} point cloud slice may include all information related to the point cloud slice, such as a geometry slice header, geometry data, an attribute slice header, and attribute data that are related to the point cloud slice, which may include an identifier of the point cloud slice, an identifier of a point cloud frame to which the point cloud slice belongs, and the like. For a specific process in which the server encodes point cloud data and performs file encapsulation on an obtained point cloud bitstream, refer to a subsequent description in an embodiment corresponding to FIG. 5. Details are not described herein.

To support the operations in this embodiment of this application, based on the related art, in this embodiment of this application, several descriptive fields are added at a system layer, including a high-level syntactic level, a file encapsulation level, and a transmission signaling level. Subsequently, using an extended AVS encoding high-level syntactic structure, an ISOBMFF data box, and DASH signaling as examples, a relevant field is defined to support indications of point cloud slice encoding, point cloud file encapsulation, and transmission signaling.

The following describes in detail a relevant field extended in AVS GPCC bitstream high-level syntax (for example, an HLS definition related to an extended point cloud slice) with reference to relevant syntax, to describe specific content of the point cloud slice indication information.

In this embodiment of this application, the point cloud slice indication information may include content that is related to a point cloud slice and that is in a geometry header. For example, for ease of understanding and description, using one point cloud frame (which may be any point cloud frame) in the point cloud bitstream as an example, the point cloud frame includes M point cloud slices, point cloud slice indication information related to the point cloud frame may specifically include a first point cloud frame identification field, a multi-point cloud slice identification field, and a point cloud slice number indication field, and the first point cloud frame identification field, the multi-point cloud slice identification field, and the point cloud slice number indication field may be all added in a geometry header corresponding to the point cloud frame. The first point cloud frame identification field may indicate an identifier of the point cloud frame; the multi-point cloud slice identification field may indicate that the point cloud frame includes one or more point cloud slices; and the point cloud slice number indication field may indicate a number of point cloud slices included in the point cloud frame (which may be a true number value or a value that differs from a true number value by a constant).

In one embodiment, when a value of the multi-point cloud slice identification field is a first flag value (for example, 1), the point cloud frame includes a plurality of point cloud slices. In this case, M is a positive integer greater than 1, and a difference between a number of the plurality of point cloud slices and a field value of the point cloud slice number indication field is X, X being a non-negative integer (for example, 0 or 1 or 2). When X = 0, the field value of the point cloud slice number indication field is equal to a true number of the plurality of point cloud slices. When X = 1, the field value of the point cloud slice number indication field plus 1 is equal to a true number of the plurality of point cloud slices. A specific value of X is not limited in the embodiments of this application. In one embodiment, when a value of the multi-point cloud slice identification field is a second flag value (for example, 0), the point cloud frame includes one point cloud slice. In this case, M = 1.

Further, for ease of understanding, refer to Table 1. Table 1 shows syntax of a geometry header information structure (for example, geometry_header()) of point cloud media provided in the embodiments of this application:

**Table 1**

| | |
|---|---|
| geometry_header( ) { | Descriptor |
| frame_id | ue(v) |
| gps_lcu_node_size_log2_minus_one | ue(v) |
| gps_implicit_geom_partition_flag | u(1) |
| if( gps_implicit_geom_partition_flag ) { | |
| gps_max_num_implicit_qtbt_before_ot | ue(v) |
| gps_min_size_implicit_qtbt | ue(v) |
| } | |
| gps_single_mode_flag | u(1) |
| gps_save_state_flag | u(1) |
| gps_multi_slice_flag | u(1) |
| If(gps_multi_slice_flag == 1){ | |
| gps_num_slice_minus_one | ue(v) |
| } | |
| byte_alignment( ) | |
| } | |

Some of the semantics of the syntax shown in Table 1 above are as follows: frame_id (namely, the first point cloud frame identification field) indicates an identifier of a current point cloud frame, and different point cloud slices in the same point cloud frame have the same identifier of the point cloud frame. When a value of gps_multi_slice_flag (namely, the multi-point cloud slice identification field) is 1 (namely, the first flag value), the current point cloud frame includes a plurality of point cloud slices; or when a value of gps_multi_slice_flag is 0 (namely, the second flag value), the current point cloud frame includes only one point cloud slice. A value of gps_num_slice_minus_one (namely, the point cloud slice number indication field) is a number of point cloud slices in the current point cloud frame minus one (that is, X = 1).

In this embodiment of this application, the point cloud slice indication information may further include content that is related to a point cloud slice and that is in an attribute header. For example, for ease of understanding and description, still using one point cloud frame in the point cloud bitstream as an example, point cloud slice indication information related to the point cloud frame may specifically include a second point cloud frame identification field, the second point cloud frame identification field may be added in an attribute header corresponding to the point cloud frame, and the second point cloud frame identification field may indicate an identifier of the point cloud frame.

Further, for ease of understanding, refer to Table 2. Table 2 shows syntax of an attribute header information structure (for example, attribute_header()) of point cloud media provided in the embodiments of this application:

**Table 2**

| | |
|---|---|
| attribute_header( ) { | Descriptor |
| aps_frame_id | ue(v) |
| for ( attrIdx = 0; attrIdx < (maxNumAttributesMinus1 + 1); attrIdx ++ ){ | |
| ... | u(1) |
| } | |
| ... | |
| } | |

Some of the semantics of the syntax shown in Table 2 above are as follows: aps_frame_id (namely, the second point cloud frame identification field) indicates an identifier of a point cloud frame corresponding to a current attribute header.

In this embodiment of this application, the point cloud slice indication information may further include content that is related to a point cloud slice and that is in a geometry slice header. For example, for one point cloud frame in the point cloud bitstream, the point cloud frame may include M point cloud slices, and each point cloud slice corresponds to one geometry slice header. For ease of understanding and description, using a target point cloud slice in the point cloud frame as an example, the target point cloud slice may be any point cloud slice in the M point cloud slices. In this case, point cloud slice indication information related to the point cloud frame may specifically include a third point cloud frame identification field. The third point cloud frame identification field may be added in a geometry slice header related to the point cloud frame, for example, added in a geometry slice header corresponding to the target point cloud slice. In this case, the third point cloud frame identification field may indicate an identifier of a point cloud frame to which the target point cloud slice corresponding to the geometry slice header belongs.

For ease of understanding, refer to Table 3. Table 3 shows syntax of a geometry slice header structure (for example, geometry _slice_header()) of point cloud media provided in the embodiments of this application:

**Table 3**

| | |
|---|---|
| geometry_slice_header( ) { | Descriptor |
| slice_id | ue(v) |
| gbh_frame_id | ue(v) |
| ... | f(1) |
| byte_alignment( ) | |
| } | |

Some of the semantics of the syntax shown in Table 3 above are as follows: slice_id indicates an identifier of a current geometry point cloud slice (for example, a mark number of the point cloud slice in a point cloud frame to which the point cloud slice belongs). gbh_frame_id (namely, the third point cloud frame identification field) indicates an identifier of a point cloud frame corresponding to the current geometry point cloud slice.

In the embodiments of this application, a point cloud slice header may be associated with a point cloud slice data part, for example, a geometry slice header and geometry data of the same point cloud slice may be associated. For ease of understanding, still using the target point cloud slice as an example, the geometry slice header corresponding to the target point cloud slice may further include a first point cloud slice identification field (for example, slice_id in Table 3) indicating the target point cloud slice. Based on this, in an optional implementation, when the geometry slice header is added in general geometry data bitstream information related to the target point cloud slice, the geometry slice header is associated with geometry data corresponding to the target point cloud slice. Alternatively, in another optional implementation, when the first point cloud slice identification field indicating the target point cloud slice exists in geometry data corresponding to the target point cloud slice, the geometry slice header is associated with the geometry data. After the corresponding geometry slice header and the geometry data are associated in any one of the foregoing association manners, when a point cloud frame includes a plurality of point cloud slices, different point cloud slices may be distinguished from each other based on the first point cloud slice identification field in the geometry slice header. In other words, a geometry slice header and geometry data that have the same slice_id belong to a point cloud slice indicated by the slice_id.

For ease of understanding, refer to Table 4. Table 4 shows syntax of a general geometry data bitstream information structure (for example, general_geometry_data_bitstream()) of point cloud media provided in the embodiments of this application:

**Table 4**

| | |
|---|---|
| general_geometry_data_bitstream() { | Descriptor |
| geometry_slice_header() | |
| geometry_data( ) | |
| byte_alignment() | |
| } | |

Some of the semantics of the syntax shown in Table 4 above are as follows: geometry _slice_header() is a geometry slice header (with a specific syntax structure shown in Table 3). The geometry slice header carries slice_id (namely, the first point cloud slice identification field) shown in Table 3, followed by geometry_data(), which is attribute data associated with the geometry slice header. In the related art, each slice header and point cloud slice data are individually defined, but no indication is provided for how to specifically store each slice header and point cloud slice data in a corresponding point cloud frame. In this case, each slice header and point cloud slice data are theoretically unordered. In the embodiments of this application, geometry _slice_header() is necessarily followed by geometry_data(), the geometry _slice_header() and the following geometry_data() belong to the same point cloud slice, and the geometry_slice_header() and the geometry _data() are associated for decoding in a unit of a point cloud slice. Alternatively, in one embodiment, a corresponding field indication slice_id may be directly added in geometry _data() to associate the geometry slice header with the geometry data.

Similarly, the point cloud slice indication information may further include content that is related to a point cloud slice and that is in an attribute slice header. Each point cloud slice may correspond to one attribute slice header. For ease of understanding and description, still using a target point cloud slice in the M point cloud slices included in the point cloud frame as an example, point cloud slice indication information related to the point cloud frame may further include a fourth point cloud frame identification field. The fourth point cloud frame identification field may be added in an attribute slice header related to the point cloud frame, for example, added in an attribute slice header corresponding to the target point cloud slice. In this case, the fourth point cloud frame identification field may indicate an identifier of a point cloud frame to which the target point cloud slice corresponding to the attribute slice header belongs. In addition, when a value of a multi-point cloud slice identification field in a geometry header corresponding to the point cloud frame is a first flag value (for example, 1), the attribute slice header may further include a reflectance attribute quantization parameter offset, and the reflectance attribute quantization parameter offset may be configured for controlling a reflectance attribute quantization parameter. In one embodiment, when a value of the multi-point cloud slice identification field is a second flag value (for example, 0), the reflectance attribute quantization parameter offset may not be set.

For ease of understanding, refer to Table 5. Table 5 shows syntax of an attribute slice header structure (for example, attribute_slice_header()) of point cloud media provided in the embodiments of this application:

**Table 5**

| | |
|---|---|
| attribute_slice_header( ) { | Descriptor |
| slice_id | ue(v) |
| abh_frame_id | ue(v) |
| If(gps_multi_slice_flag == 1){ | |
| reflQPoffset | se(v) |
| } | |
| byte_alignment( ) | |
| } | |

Some of the semantics of the syntax shown in Table 5 above are as follows: slice_id indicates an identifier of a current attribute point cloud slice (for example, a mark number of the point cloud slice in a point cloud frame to which the point cloud slice belongs). abh_frame_id indicates an identifier of a point cloud frame corresponding to the current attribute point cloud slice. gps_multi_slice_flag is a point cloud slice identification field. When a value of the field is 1 (namely, a first flag value), a current point cloud frame includes a plurality of point cloud slices, and then corresponding reflQPoffset (namely, a reflectance attribute quantization parameter offset) may be indicated, where reflQPoffset may be a signed integer for controlling a reflectance attribute quantization parameter, ranging from -32 to 32.

In the embodiments of this application, an attribute slice header and attribute data of the same point cloud slice may also be associated. For ease of understanding, still using the target point cloud slice as an example, the attribute slice header corresponding to the target point cloud slice may further include a second point cloud slice identification field (for example, slice_id in Table 5) indicating the target point cloud slice. Based on this, in an optional implementation, when the attribute slice header is added in general attribute data bitstream information related to the target point cloud slice, the attribute slice header is associated with attribute data corresponding to the target point cloud slice. Alternatively, in another optional implementation, when the second point cloud slice identification field indicating the target point cloud slice exists in attribute data corresponding to the target point cloud slice, the attribute slice header is associated with the attribute data. After the corresponding attribute slice header and the attribute data are associated in any one of the foregoing association manners, when a point cloud frame includes a plurality of point cloud slices, different point cloud slices may be distinguished from each other based on the second point cloud slice identification field in the attribute slice header. In other words, an attribute slice header and attribute data that have the same slice_id belong to a point cloud slice indicated by the slice_id.

For ease of understanding, refer to Table 6. Table 6 shows syntax of a general attribute data bitstream information structure (for example, general_attribute_data_bitstream()) of point cloud media provided in the embodiments of this application:

**Table 6**

| | |
|---|---|
| general_attribute_data_bitstream() { | Descriptor |
| attribute_slice_header( ) | |
| If (attributePresentFlag[1]) { | |
| attribute_data_reflectance() | |
| byte_alignment( ) | |
| } | |
| if (attributePresentFlag[0]) { | |
| attribute_data_color() | |
| byte_alignment( ) | |
| } | |
| } | |

Some of the semantics of the syntax shown in Table 6 above are as follows: attribute_slice_header() is an attribute slice header (with a specific syntax structure shown in Table 5). The attribute slice header carries slice_id (namely, the second point cloud slice identification field) shown in Table 5, followed by attribute_data_reflectance() (namely, reflectance attribute data) or attribute_data_color() (namely, color attribute data), which is attribute data associated with the attribute slice header (in addition to reflectance and color, there may be another type of attribute data, which is not limited herein and is not listed in Table 6). In the embodiments of this application, attribute_slice_header() is necessarily followed by attribute_data (which may be attribute_data_reflectance() or attribute_data_color() or another type of attribute data), the attribute_slice_header() and the following attribute_data belong to the same point cloud slice, and the attribute_slice_header() and the attribute_data are associated for decoding in a unit of a point cloud slice. Alternatively, in one embodiment, a corresponding field indication slice_id may be directly added in attribute_data_reflectance() or attribute_data_color() to associate the attribute slice header with the attribute data.

The client may perform decoding in a unit of a point cloud slice through the foregoing field extension at the high-level syntactic level of the point cloud bitstream. For example, when a point cloud frame is decoded, a geometry header and an attribute header that correspond to the point cloud frame may be first decoded. The corresponding geometry header is parsed to know a number of point cloud slices existing in the point cloud frame (for example, gps_num_slice_minus_one in Table 1 is parsed), that is, know a specific number of to-be-decoded point cloud slices. In addition, an identifier of the current point cloud frame may also be known (for example, frame_id in Table 1 and aps_frame_id in Table 2 are parsed). In this case, when a point cloud slice therein is decoded, a geometry slice header corresponding to the point cloud slice may be first decoded, and geometry data associated with the geometry slice header may be then decoded. Similarly, an attribute slice header corresponding to the point cloud slice may be first decoded, and attribute data associated with the attribute slice header may be then decoded. In this case, even if there are a plurality of point cloud slices, data between different point cloud slices can be effectively differentiated. This can implement encoding and decoding technologies based on the point cloud slices, for example, can support differentiated encoding optimization on different point cloud slices. Point cloud frame identifiers (for example, frame_id in Table 1, aps_frame_id in Table 2, gbh_frame_id in Table 3, and abh_frame_id in Table 5) corresponding to different point cloud slices in the same point cloud frame have the same values.

The point cloud slice indication information is added in the high-level syntax of the point cloud bitstream by the server in a point cloud data encoding process. Correspondingly, the client may subsequently decode the point cloud bitstream based on the point cloud slice indication information. For a specific decoding process, refer to a subsequent operation S102.

Similarly, when the server performs file encapsulation on the point cloud bitstream, metadata information required for track transmission needs to be added. For example, corresponding point cloud slice encapsulation information may be added to be encapsulated together with the point cloud bitstream into a corresponding media file resource. The point cloud slice encapsulation information may include information related to a point cloud slice in a corresponding track, such as a number of point cloud slices included in the track, and identifiers of these point cloud slices. In one embodiment, if the point cloud bitstream is encapsulated based on a first encapsulation mode (that is, file encapsulation based on a point cloud slice), corresponding point cloud slice encapsulation information may be indicated in one or more data boxes in a point cloud slice track sample entry or a point cloud slice information sample group entry. In one embodiment, if the point cloud bitstream is encapsulated based on a second encapsulation mode (that is, file encapsulation not based on a point cloud slice), corresponding point cloud slice encapsulation information may be indicated by a subsample information data box. An encapsulation mode for file encapsulation is not limited in the embodiments of this application. For a specific process of file encapsulation, refer to S202 in an embodiment corresponding to FIG. 5.

Further, the following describes in detail a relevant field extended in a file encapsulation level (for example, an extended ISOBMFF data box) with reference to relevant syntax, to describe specific content of the point cloud slice encapsulation information.

In a scenario of file encapsulation based on the first encapsulation mode, for any point cloud frame in the point cloud bitstream, for ease of understanding and description, it may be assumed that M point cloud slices in the point cloud frame are encapsulated in T point cloud slice tracks, where T is a positive integer. A specific number of the point cloud slice tracks is not limited herein. The T point cloud slice tracks include a point cloud slice track Tᵢ, i being a positive integer less than or equal to T. In this case, the point cloud slice track Tᵢ is used as an example for subsequent description. The media file resource obtained by the client may include a point cloud slice track sample entry corresponding to the point cloud slice track Tᵢ, and the point cloud slice track sample entry may indicate point cloud slice encapsulation information included in the point cloud slice track Tᵢ.

Based on this, the point cloud slice track sample entry is defined in the embodiments of this application. For a specific definition, refer to Table 7. Table 7 shows a definition of a point cloud slice track sample entry provided in the embodiments of this application:

**Table 7**

| | |
|---|---|
| Sample entry type: | 'apst' |
| Included in: | SampleDescriptionBox |
| Mandatory: | No |
| Number: | One or more |

A sample entry type of a point cloud slice track is 'apst'. The point cloud slice track sample entry may be included in SampleDescriptionBox. Each point cloud slice track may correspond to one point cloud slice track sample entry, and the sample entry may be an extension based on VolumetricVisualSampleEntry.

For a scenario of multi-track encapsulation based on a point cloud slice, T is a positive integer greater than 1. Each point cloud slice track may include one or more samples. Each sample may include zero or one or more point cloud slices corresponding to a point cloud frame. A number of point cloud slices included in each point cloud frame and a number of point cloud slices in each sample are not limited in the embodiments of this application. For example, in the point cloud slice track Tᵢ, a sample 1 may include one point cloud slice of a point cloud frame 1, a sample 2 may include two point cloud slices of a point cloud frame 2, and a sample 3 may include zero point cloud slices of a point cloud frame 3 (that is, the sample 3 is empty). Considering that numbers of point cloud slices in different point cloud frames are not exactly the same, and during multi-track encapsulation, point cloud slices may not exist in samples of some tracks, or a number of point cloud slices changes dynamically, the embodiments of this application provide various manners for supporting the encapsulation mode based on point cloud slices.

In an optional implementation, both static point cloud slice encapsulation information and dynamic point cloud slice encapsulation information may be indicated by the point cloud slice track sample entry. For ease of understanding, refer to Table 8. Table 8 shows syntax of a point cloud slice track sample entry structure (for example, AVSPCCSampleEntry) provided in the embodiments of this application:

**Table 8**

| |
|---|
| ```
aligned(8) class AVSPCCSampleEntry() extends VolumetricVisualSampleEntry (apst) {
 unsigned int(1) dynamic num_slices_flag;
  bit(7) reserved = 0;
  unsigned int(16) max_num_slice_ids;
  for(i = 0; i < max_num_slice_ids; i++){
            unsigned int(16) slice_id;
  }
}
``` |

In the implementation corresponding to Table 8, the point cloud slice track sample entry may include a point cloud slice information dynamic identification field (for example, dynamic_num_slices_flag in Table 8), a track point cloud slice maximum number indication field (for example, max_num_slice_ids in Table 8), and a third point cloud slice identification field (for example, slice_id in Table 8). The point cloud slice information dynamic identification field may indicate change status of point cloud slice encapsulation information in the point cloud slice track Tᵢ. In an embodiment of this application, the change status may include a static state and a dynamic state. The static state indicates that samples in the point cloud slice track Tᵢ include the same numbers of point cloud slices. The dynamic state indicates that samples in the point cloud slice track Tᵢ include not exactly the same numbers of point cloud slices. The track point cloud slice maximum number indication field may indicate a number of point cloud slices included in a maximum number sample in the point cloud slice track Tᵢ. The maximum number sample is a sample with a maximum number of point cloud slices included in the point cloud slice track Tᵢ. It is assumed that a value of the track point cloud slice maximum number indication field is N1, N1 being a positive integer. The third point cloud slice identification field may indicate an identifier of a point cloud slice included in each sample in the point cloud slice track Tᵢ.

In one embodiment, when a value of the point cloud slice information dynamic identification field is a third flag value (for example, 0), the change status of the point cloud slice encapsulation information in the point cloud slice track Tᵢ is a static state. In other words, for different samples, the point cloud slice encapsulation information in the point cloud slice track Tᵢ does not change dynamically. In this case, N1 point cloud slices exist in each sample in the point cloud slice track Tᵢ. In one embodiment, when a value of the point cloud slice information dynamic identification field is a fourth flag value (for example, 1), the change status of the point cloud slice encapsulation information in the point cloud slice track Tᵢ is a dynamic state. In other words, for different samples, the point cloud slice encapsulation information in the point cloud slice track Tᵢ changes dynamically. In this case, at most N1 point cloud slices exist in each sample in the point cloud slice track Tᵢ. In other words, there may be cases in which no point cloud slice exists in a sample, and numbers of point cloud slices included in samples in which point cloud slices exist may not be the same.

For the case in which the point cloud slice encapsulation information changes dynamically, the track point cloud slice maximum number indication field in the point cloud slice track sample entry shown in Table 8 only indicates that at most N1 point cloud slices exist in each sample in the point cloud slice track Tᵢ, but does not explicitly indicate the case in which no point cloud slice exists in a sample. Therefore, an embodiment of this application can further introduce a point cloud slice information sample group entry to resolve this problem. For ease of understanding, refer to Table 9. Table 9 shows a definition of a point cloud slice information sample group entry provided in the embodiments of this application:

**Table 9**

| | |
|---|---|
| Data box type: | 'asig' |
| Included in: | Sample Group Description Box ('sgpd') |
| Mandatory: | No |
| Number: | Zero or more |

A data box type of a point cloud slice information sample group entry is 'asig', and the point cloud slice information sample group entry may be included in Sample Group Description Box.

For ease of understanding, refer to Table 10. Table 10 shows syntax of a point cloud slice information sample group entry structure (for example, AvsPccSliceInfoEntry) provided in the embodiments of this application:

**Table 10**

| |
|---|
| ```
 aligned(8) class AvsPccSliceInfoEntry() extends VolumetricVisualSampleGroupEntry ('asig') {
 unsigned int(1) slice_contained_flag;
 bit(7) reserved;
 }
``` |

With reference to the embodiment corresponding to Table 8, when the change status of the point cloud slice encapsulation information is the dynamic state, the media file resource may further include a point cloud slice information sample group entry corresponding to the point cloud slice track Tᵢ. As shown in Table 10, the point cloud slice information sample group entry may include a point cloud slice presence identification field (for example, slice_contained_flag in Table 10). The point cloud slice presence identification field may indicate presence or absence of a point cloud slice in each sample of the point cloud slice track Tᵢ. For ease of understanding and description, assuming that the point cloud bitstream includes S point cloud frames, the point cloud slice track Tᵢ includes S samples, S being a positive integer, and the S samples include a sample Sⱼ, j being a positive integer less than or equal to S. The sample Sⱼ is used as an example for subsequent description. In one embodiment, when a value of a point cloud slice presence identification field corresponding to the sample Sⱼ is a fifth flag value (for example, 1), the sample Sⱼ belongs to a first sample group. A point cloud slice exists in each sample included in the first sample group, and point cloud slice encapsulation information included in each sample in the first sample group may be indicated by a subsample information data box (in this case, a subsample may be divided in a unit of a point cloud slice). For a specific syntactic structure of the subsample information data box, refer to subsequent Table 15. Details are not described herein. In one embodiment, when a value of a point cloud slice presence identification field corresponding to the sample Sⱼ is a sixth flag value (for example, 0), the sample Sⱼ belongs to a second sample group. No point cloud slice exists in each sample included in the second sample group.

The point cloud slice information sample group entry is configured for classifying samples in a point cloud slice track into different sample group, and each sample group may have its own characteristics. For example, the first sample group is a set of samples in which point cloud slices exist, and the second sample group is a set of samples in which no point cloud slices exist. Based on the above, whether a number of point cloud slices in a current sample is greater than 0 can be directly indicated by the point cloud slice presence identification field in the point cloud slice information sample group entry, so that a sample in which no point cloud slice exists can be quickly identified.

In an optional implementation, static point cloud slice encapsulation information and dynamic point cloud slice encapsulation information may be separately indicated. For example, the static point cloud slice encapsulation information may be indicated by the point cloud slice track sample entry (for its definition, refer to Table 7), and the dynamic point cloud slice encapsulation information may be indicated by the point cloud slice information sample group entry. For ease of understanding, refer to Table 11. Table 11 shows syntax of a point cloud slice track sample entry structure (for example, AVSPCCSampleEntry) provided in the embodiments of this application:

**Table 11**

| |
|---|
| ```
 aligned(8) class AVSPCCSampleEntry() extends VolumetricVisualSampleEntry (apst) {
 unsigned int(1) dynamic num_slices_flag;
 bit(7) reserved = 0;
 if(dynamic_num_slicesflag == 0){
     unsigned int(16) num_slices;
     for(i=0; i < num_slices; i++){
            unsigned int(16) slice_id;
     }
}
}
``` |

In the implementation corresponding to Table 11, the point cloud slice track sample entry may include a point cloud slice information dynamic identification field (for example, dynamic_num_slices_flag in Table 11), and the point cloud slice information dynamic identification field may indicate change status of the point cloud slice encapsulation information in the point cloud slice track Tᵢ, and has semantics same as the semantics of the field dynamic_num_slices_flag in Table 8. In one embodiment, when a value of the point cloud slice information dynamic identification field is a third flag value (for example, 0), the change status of the point cloud slice encapsulation information in the point cloud slice track Tᵢ is a static state. Further, a point cloud slice track sample entry indicating static point cloud slice encapsulation information may further include a first track point cloud slice number indication field (for example, num_slices in Table 11) and a fourth point cloud slice identification field (for example, slice_id in Table 11). The first track point cloud slice number indication field may indicate a number of point cloud slices included in each sample in the point cloud slice track Tᵢ. Assuming that a value of the first track point cloud slice number indication field is K1, K1 point cloud slices exist in each sample in the point cloud slice track Tᵢ, K1 being a positive integer. The fourth point cloud slice identification field may indicate an identifier of a point cloud slice included in each sample in the point cloud slice track Tᵢ.

In one embodiment, when a value of the point cloud slice information dynamic identification field is a fourth flag value (for example, a value of dynamic_num_slices_flag in Table 11 is 1), the change status of the point cloud slice encapsulation information in the point cloud slice track Tᵢ is a dynamic state. In this case, if dynamic point cloud slice encapsulation information is still indicated in the point cloud slice track sample entry, the client still tries to decode a sample in which no point cloud slice exists, which results in a waste of decoding resources. Therefore, an embodiment of this application can further introduce a point cloud slice information sample group entry (for its definition, refer to Table 9) to indicate dynamic point cloud slice encapsulation information. In other words, for the implementation corresponding to Table 11, the media file resource may further include a point cloud slice information sample group entry indicating dynamic point cloud slice encapsulation information. For ease of understanding, refer to Table 12. Table 12 shows syntax of a point cloud slice information sample group entry structure (for example, AvsPccSliceInfoEntry) provided in the embodiments of this application:

**Table 12**

| |
|---|
| ```
 aligned(8) class AvsPccSliceInfoEntry() extends VolumetricVisualSampleGroupEntry ('asig') {
 unsigned int(16) num_slices;
 if(num_slices > 0){
  for(i=0; i< num_slices; i++){
     unsigned int(16) slice_id;
 }
 }
 }
``` |

In the implementation corresponding to Table 12, the point cloud slice information sample group entry may include a second track point cloud slice number indication field (for example, num_slices in Table 12) and a fifth point cloud slice identification field (for example, slice_id in Table 12). For ease of understanding and description, assuming that the point cloud bitstream includes S point cloud frames, the point cloud slice track Tᵢ includes S samples, S being a positive integer, and the S samples include a sample Sⱼ, j being a positive integer less than or equal to S. Using the sample Sⱼ as an example for description, the second track point cloud slice number indication field may indicate a number of point cloud slices included in the sample Sⱼ in the point cloud slice track Tᵢ. When the number of the point cloud slices included in the sample Sⱼ is greater than 0, a point cloud slice exists in the sample Sⱼ, and the corresponding fifth point cloud slice identification field may indicate an identifier of a point cloud slice included in the sample Sⱼ.

Similar to the embodiment corresponding to Table 10, samples in a point cloud slice track may also be classified into different sample groups based on the point cloud slice information sample group entry shown in Table 12. For example, a sample that meets num_slices > 0 in the point cloud slice track Tᵢ may be classified into a first sample group. The first sample group is a set of samples in which point cloud slices exist in the point cloud slice track Tᵢ. Conversely, a sample that does not meet num_slices > 0 in the point cloud slice track Tᵢ may be classified into a second sample group. The second sample group is a set of samples in which no point cloud slices exist in the point cloud slice track Tᵢ.

In addition, the foregoing indication manner may also be applied to a point cloud tile (that is, a tile structure in the existing MPEG technology). The point cloud tile may include one or more point cloud slices. Point cloud slices included in one point cloud tile are all from the same point cloud frame, and a correspondence between a point cloud tile and a point cloud slice may span a plurality of point cloud frames. For example, for a point cloud frame frame1, it is assumed that a point cloud tile tile1 corresponds to a point cloud slice slice1 in the point cloud frame frame1, and for a point cloud frame frame2, if the point cloud tile tile1 also corresponds to the point cloud slice slice1 in the point cloud frame frame2, it may be considered that a correspondence between a point cloud tile and a point cloud slice does not change. If the correspondence is not updated in a current point cloud tile track, the point cloud tile tile1 corresponding to each point cloud frame includes the point cloud slice slice1 in the point cloud frame. In other words, the correspondence still takes effect. In one embodiment, the correspondence may alternatively be updated. For example, for a point cloud frame frame1, a point cloud tile tile1 may correspond to a point cloud slice slice1 in the point cloud frame frame1; and for a point cloud frame frame2, the point cloud tile tile1 may correspond to a point cloud slice slice2 in the point cloud frame frame2. This is not limited in the embodiments of this application.

Based on this, in the embodiments of this application, file encapsulation may be performed based on the point cloud tile, with a corresponding indication manner of point cloud tile encapsulation information similar to the foregoing indication manner of the point cloud slice encapsulation information, which is specifically as follows:

For ease of understanding and description, it is assumed that the M point cloud slices in the point cloud frame are classified into H point cloud tiles, H being a positive integer less than or equal to M, and the H point cloud tiles are encapsulated in G point cloud tile tracks, G being a positive integer. The G point cloud tile tracks include a point cloud tile track Gₚ, p being a positive integer less than or equal to G. Specific numbers of the point cloud tiles and the point cloud tile tracks are not limited. The point cloud tile track Gₚ is used as an example for subsequent description. In this case, the media file resource obtained by the client may include a point cloud tile track sample entry corresponding to the point cloud tile track Gₚ, and the point cloud tile track sample entry may indicate point cloud tile encapsulation information included in the point cloud tile track Gₚ.

Based on this, similar to the scenario of multi-track encapsulation based on a point cloud slice, for a scenario of multi-track encapsulation based on a point cloud tile, each point cloud tile track may include one or more samples, and each sample may include zero or one or more point cloud tiles corresponding to a point cloud frame. A number of point cloud tiles included in each point cloud frame and a number of point cloud tiles in each sample are not limited in the embodiments of this application. In this case, during multi-track encapsulation, point cloud tiles may not exist in samples of some tracks, or a number of point cloud tiles changes dynamically. The embodiments of this application provide various manners for supporting the encapsulation mode based on point cloud tiles.

In an optional implementation, both static point cloud tile encapsulation information and dynamic point cloud tile encapsulation information may be indicated by the point cloud tile track sample entry. Similar to the embodiment corresponding to Table 8, the point cloud tile track sample entry may include a point cloud tile information dynamic identification field, a track point cloud tile maximum number indication field, and a first point cloud tile identification field. The point cloud tile information dynamic identification field may indicate change status of point cloud tile encapsulation information in the point cloud tile track Gₚ. In an embodiment of this application, the change status may include a static state and a dynamic state. The static state indicates that samples in the point cloud tile track Gₚ include the same numbers of point cloud tiles. The dynamic state indicates that samples in the point cloud tile track Gₚ include not exactly the same numbers of point cloud tiles. The track point cloud tile maximum number indication field may indicate a number of point cloud tiles included in a maximum number sample in the point cloud tile track Gₚ. The maximum number sample is a sample with a maximum number of point cloud tiles included in the point cloud tile track Gₚ. It is assumed that a value of the track point cloud tile maximum number indication field is N2, N2 being a positive integer. The first point cloud tile identification field may indicate an identifier of a point cloud tile included in each sample in the point cloud tile track Gₚ.

In one embodiment, when a value of the point cloud tile information dynamic identification field is a seventh flag value (for example, 0), the change status of the point cloud tile encapsulation information is a static state. In other words, for different samples, the point cloud tile encapsulation information in the point cloud tile track Gₚ does not change dynamically. In this case, N2 point cloud tiles exist in each sample in the point cloud tile track Gₚ. In one embodiment, when a value of the point cloud tile information dynamic identification field is an eighth flag value (for example, 1), the change status of the point cloud tile encapsulation information is a dynamic state. In other words, for different samples, the point cloud tile encapsulation information in the point cloud tile track Gₚ changes dynamically. In this case, at most N2 point cloud tiles exist in each sample in the point cloud tile track Gₚ.

Further, for the scenario in which the point cloud tile encapsulation information changes dynamically, an embodiment of this application introduces a point cloud tile information sample group entry for indicating the scenario. For ease of understanding, refer to Table 13. Table 13 shows a definition of a point cloud tile information sample group entry (for example, GPccTileInfoEntry) provided in the embodiments of this application:

**Table 13**

| |
|---|
| ```
aligned(8) class GPccTileInfoEntry() extends VolumetricVisualSampleGroupEntry ('gtig') {
  unsigned int(1) tile_contained_flag;
  bit(7) reserved;
  }
``` |

In the implementation corresponding to Table 13, when the change status of the point cloud tile encapsulation information is the dynamic state, the media file resource may further include a point cloud tile information sample group entry corresponding to the point cloud tile track Gₚ. As shown in Table 13, the point cloud tile information sample group entry may include a point cloud tile presence identification field (for example, tile_contained_flag in Table 13). The point cloud tile presence identification field may indicate presence or absence of a point cloud tile in each sample of the point cloud tile track Gₚ. For ease of understanding and description, assuming that the point cloud bitstream includes S point cloud frames, the point cloud tile track Gₚ includes S samples, S being a positive integer, and the S samples include a sample Sⱼ, j being a positive integer less than or equal to S. The sample Sⱼ is used as an example for subsequent description. In one embodiment, when a value of a point cloud tile presence identification field corresponding to the sample Sⱼ is a ninth flag value (for example, 1), the sample Sⱼ belongs to a third sample group. A point cloud tile exists in each sample included in the third sample group, and point cloud tile encapsulation information included in each sample in the third sample group may be indicated by a subsample information data box (in this case, a subsample may be divided in a unit of a point cloud tile). For a specific syntactic structure of the subsample information data box, refer to subsequent Table 15. Details are not described herein. In one embodiment, when a value of a point cloud tile presence identification field corresponding to the sample Sⱼ is a tenth flag value (for example, 0), the sample Sⱼ belongs to a fourth sample group. No point cloud tile exists in each sample included in the fourth sample group.

Based on the above, whether a number of point cloud tiles in a current sample is greater than 0 can be directly indicated by the point cloud tile presence identification field in the point cloud tile information sample group entry, so that a sample in which no point cloud tile exists can be quickly identified.

In an optional implementation, static point cloud tile encapsulation information and dynamic point cloud tile encapsulation information may be separately indicated. For example, the static point cloud tile encapsulation information may be indicated by the point cloud tile track sample entry, and the dynamic point cloud tile encapsulation information may be indicated by the point cloud tile information sample group entry.

For example, the point cloud tile track sample entry may include a point cloud tile information dynamic identification field, and the point cloud tile information dynamic identification field may indicate change status of the point cloud tile encapsulation information in the point cloud tile track Gₚ. In one embodiment, when a value of the point cloud tile information dynamic identification field is a seventh flag value (for example, 0), the change status of the point cloud tile encapsulation information in the point cloud tile track Gₚ is a static state. Further, a point cloud tile track sample entry indicating static point cloud tile encapsulation information may further include a first track point cloud tile number indication field and a second point cloud tile identification field. The first track point cloud tile number indication field may indicate a number of point cloud tiles included in each sample in the point cloud tile track Gₚ. Assuming that a value of the first track point cloud tile number indication field is K2, K2 point cloud tiles exist in each sample in the point cloud tile track Gₚ, K2 being a positive integer. The second point cloud tile identification field may indicate an identifier of a point cloud tile included in each sample in the point cloud tile track Gₚ.

In one embodiment, when a value of the point cloud tile information dynamic identification field is an eighth flag value (for example, 1), the change status of the point cloud tile encapsulation information in the point cloud tile track Gₚ is a dynamic state. In this case, if dynamic point cloud tile encapsulation information is still indicated in the point cloud tile track sample entry, the client still tries to decode a sample in which no point cloud tile exists, which results in a waste of decoding resources. Therefore, an embodiment of this application can further introduce a point cloud tile information sample group entry to indicate dynamic point cloud tile encapsulation information. In other words, the media file resource may further include a point cloud tile information sample group entry indicating dynamic point cloud tile encapsulation information. For ease of understanding, refer to Table 14. Table 14 shows syntax of a point cloud tile information sample group entry structure (for example, GPccTileInfoEntry) provided in the embodiments of this application:

**Table 14**

| |
|---|
| ```
 aligned(8) class GPccTileInfoEntry() extends VolumetricVisualSampleGroupEntry ('gtig') {
  unsigned int(16) num_tiles;
  if(num_tiles > 0){
     for(i=0; i< num_tiles; i++){
       unsigned int(16) tile_id;
 }
 }
 }
``` |

In the implementation corresponding to Table 14, the point cloud tile information sample group entry may include a second track point cloud tile number indication field (for example, num_tiles in Table 14) and a third point cloud tile identification field (for example, tile_id in Table 14). For ease of understanding and description, assuming that the point cloud bitstream includes S point cloud frames, the point cloud tile track Gₚ includes S samples, S being a positive integer, and the S samples include a sample Sⱼ, j being a positive integer less than or equal to S. Using the sample Sⱼ as an example for description, the second track point cloud tile number indication field may indicate a number of point cloud tiles included in the sample Sⱼ in the point cloud tile track Gₚ. When the number of the point cloud tiles included in the sample Sⱼ is greater than 0, a point cloud tile exists in the sample Sⱼ, and the third point cloud tile identification field may indicate an identifier of a point cloud tile included in the sample Sⱼ.

Similar to the embodiment corresponding to Table 13, samples in a point cloud tile track may also be classified into different sample groups based on the point cloud tile information sample group entry shown in Table 14. For example, a sample that meets num_tiles > 0 in the point cloud tile track Gₚ may be classified into a third sample group. The third sample group is a set of samples in which point cloud tiles exist in the point cloud tile track Gₚ. Conversely, a sample that does not meet num_tiles > 0 in the point cloud tile track Gₚ may be classified into a fourth sample group. The fourth sample group is a set of samples in which no point cloud tiles exist in the point cloud tile track Gₚ.

In addition, in an embodiment of this application, a definition of a subsample is further extended. For example, in this embodiment of this application, the subsample information data box may include a component data indication field. When component data of a target point cloud slice exists in a subsample of the point cloud slice track Tᵢ, the component data indication field may indicate a data volume of the component data included in the subsample. The target point cloud slice belongs to the M point cloud slices, and the target point cloud slice is encapsulated in the point cloud slice track Tᵢ. In one embodiment, when a value of the component data indication field is a first field value (for example, 1), the subsample includes all of the component data of the target point cloud slice. In one embodiment, when a value of the component data indication field is a second field value (for example, 0), the subsample includes a part of the component data of the target point cloud slice.

For ease of understanding, refer to Table 15. Table 15 shows syntax of a subsample information data box structure (for example, SubSampleInformationBox) provided in the embodiments of this application:

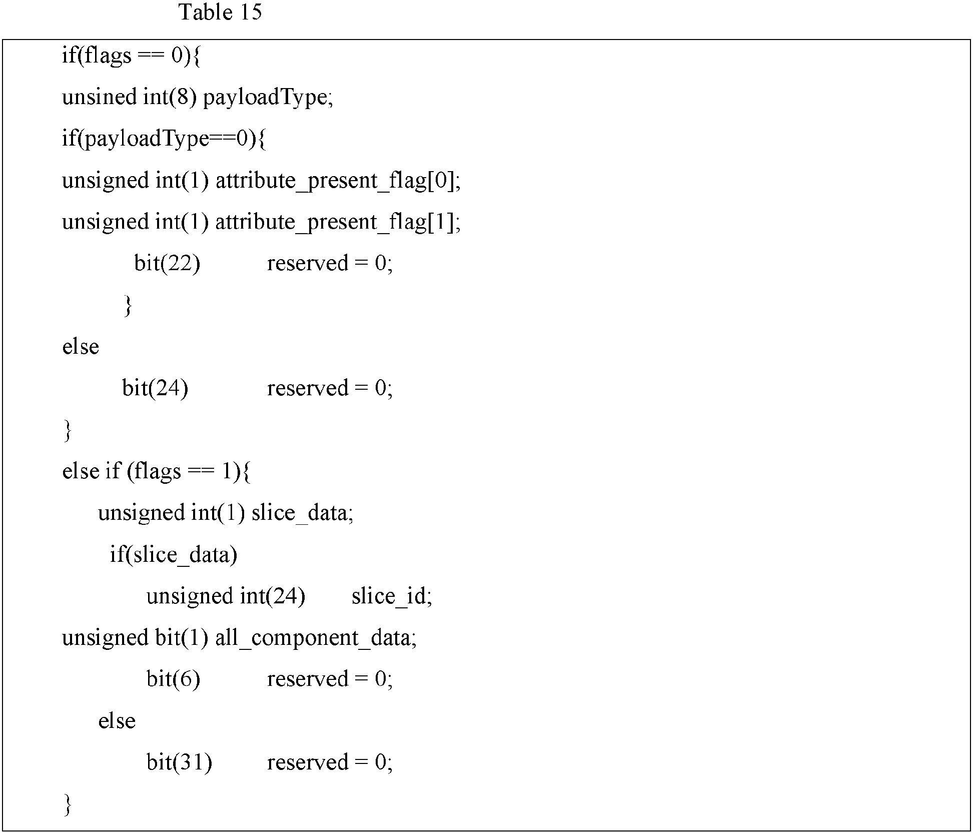

The syntax shown in Table 15 is the syntax corresponding to codec_specific_parameters in SubsampleInformationBox. Some of the semantics of the syntax shown in Table 15 above are as follows: In a scenario of file encapsulation based on the second encapsulation mode, SubSampleInformationBox may be used in file encapsulation of the point cloud bitstream, and a subsample is defined based on a value of an identification field (for example, flags in Table 15) of subsample information data. The identification field indicates a type of subsample information in this data box. In one embodiment, when a value of flags is 0, a subsample based on a type of data carried by a point cloud slice is defined. In this case, one subsample includes only one data type and relevant information. In one embodiment, when a value of flags is 1, a subsample based on a point cloud slice is defined. In this case, one subsample includes only all relevant information of one point cloud slice, including a geometry slice header, geometry data, an attribute slice header, and attribute data. The other values of flags are reserved. payloadType indicates a type of data in a point cloud slice included in a subsample, with a value of 0 indicating attribute data or a value of 1 indicating geometry data. attribute_present_flag indicates whether a subsample includes a color attribute and/or a reflectance attribute, defined in AVS-PCC. attribute_present_flag[0] indicates whether a color attribute is included. attribute_present_flag[1] indicates whether a reflectance attribute is included. slice_data indicates whether a subsample includes component data of a point cloud slice, with a value of 1 indicating that component data of a geometry and/or attribute type of a point cloud slice is included, or with a value of 0 indicating that point cloud parameter information is included. slice_id indicates an identifier of a point cloud slice corresponding to component data included in a subsample. When a value of all_component_data (namely, the component data indication field) is 1 (namely, the first field value), a current subsample includes all of component data of a corresponding point cloud slice. When a value of all_component_data is 0 (namely, the second field value), a current subsample includes a part of component data of a corresponding point cloud slice. Based on the above, the first encapsulation mode implements file encapsulation entirely based on the point cloud slice, and is a multi-track encapsulation mode for the point cloud slice; while the second encapsulation mode implements file encapsulation not specially for the point cloud slice. During actual application, an appropriate encapsulation mode may be selected based on a requirement. This is not limited in the embodiments of this application.

Alternatively, a data volume of component data included in a subsample may be determined based on whether a corresponding point cloud slice track includes a component information data box. Specifically, when a component information data box exists in the point cloud slice track Tᵢ, a subsample of the point cloud slice track Tᵢ includes component data corresponding to the component information data box. In one embodiment, when no component information data box exists in the point cloud slice track Tᵢ, a subsample of the point cloud slice track Tᵢ includes all component data of a target point cloud slice. The target point cloud slice belongs to the M point cloud slices, and the target point cloud slice is encapsulated in the point cloud slice track Tᵢ.

In this embodiment of this application, component data included in a subsample is further determined based on the foregoing extension of subsample-related syntactic information, thereby more perfecting a definition of the subsample. The subsample information data box is applicable in both a single-track encapsulation mode and a multi-track encapsulation mode. In addition, for the foregoing encapsulation based on a point cloud slice, a subsample may also be divided by using a subsample information data box. For example, when N1 (N1 > 1) point cloud slices exist in each sample in the point cloud slice track Tᵢ, each point cloud slice included in each sample may be defined as a subsample, to differentiate different point cloud slices in the same sample.

In the embodiments of this application, partial transmission of point cloud media can be supported, thereby saving bandwidth. The following describes in detail a relevant field extended in DASH signaling with reference to relevant syntax.

In a scenario of file encapsulation based on the first encapsulation mode, the media file resource obtained by the client may include some or all point cloud slice tracks obtained through file encapsulation, which may include the following specific obtaining process: The client first receives a signaling message transmitted by the server. The signaling message is generated by the server based on point cloud slice encapsulation information included in each point cloud slice track. Using the point cloud slice track Tᵢ as an example, the signaling message may include a point cloud slice identifier list corresponding to the point cloud slice track Tᵢ, and the point cloud slice identifier list may include an identifier of a point cloud slice included in the point cloud slice track Tᵢ. Further, the client may request the media file resource of the immersive media based on the signaling message. The media file resource may include data streams (namely, representations, also referred to as transport streams) corresponding to W point cloud slice tracks, where W is a positive integer less than or equal to T. In other words, the client can know, based on the point cloud slice identifier list in the signaling message, a specific point cloud slice track where a point cloud slice requested by the client is located, to request a corresponding data stream. When W = T, the client requests data streams corresponding to all point cloud slice tracks. When W< T, the client requests data streams corresponding to some point cloud slice tracks, and then the server can perform partial transmission.

In the embodiments of this application, the point cloud slice identifier list may be configured for being added to a separate point cloud slice identifier descriptor or to a component descriptor related to the point cloud slice track Tᵢ.

For example, when a point cloud slice track includes all component data of a point cloud slice, there is no relevant component descriptor. In this case, a point cloud slice identifier list may be added to a newly added and separate point cloud slice identifier descriptor. For ease of understanding, refer to Table 16. Table 16 shows syntax of a point cloud slice identifier descriptor (for example, AVSPCCSliceID descriptor) of point cloud media provided in the embodiments of this application:

**Table 16**

| Attributes for AVSPCCSliceID descriptor | Use | Data type | Description |
|---|---|---|---|
| @contained_slice_ ids | M | xs:UIntVectorType | Point cloud slice identifier list, corresponding to slice_id information in a point cloud slice track. |

contained_slice_ids (namely, the point cloud slice identifier list) in Table 16 may be used as a separate descriptor to describe a representation or an adaptation set corresponding to the point cloud slice track.

In another example, when a point cloud slice track includes only some component data of a point cloud slice, a relevant component descriptor is required. In this case, a point cloud slice identifier list may be directly added to an existing component descriptor. For ease of understanding, refer to Table 17. Table 17 shows syntax of a component descriptor (for example, GPCCComponent descriptor) structure of point cloud media provided in the embodiments of this application:

**Table 17**

| Elements and Attributes for GPCCComponent descriptor | Use | Data type | Description |
|---|---|---|---|
| component | 0..N | gpcc:gpccCom ponentType | An element whose attributes specify information for one of the Geometry point cloud components present in the representation(s) of the adaptation set. |
| component@com ponent_type | M | xs:string | Indicate a type of a point cloud component. 'geom' represents a geometry component, and 'attr' represents an attribute component. |
| component@attri bute_type | CM | xs:unsignedBy te | Indicates the type of the attribute (refer to Table 8 in ISO/IEC 23090-9 [G-PCC]). Only values between 0 and 255, inclusive, are allowed. |
| | | | Shall be present only if the component is a G-PCC attribute (i.e., @component_type has the value 'attr'). |
| component@attr _index | CM | xs:unsignedBy te | Indicates the order of the attribute present in the SPS. The value of @attr_index shall be identical to the ash_attr_sps_attr_idx value of G-PCC units carried by the Representations of the Adaptation Set. |
| | | | Shall be present only if the component is a point cloud attribute (i.e., @component_type has the value 'attr'). |
| component@cont ained_slice_ids | CM | xs:UIntVector Type | Point cloud slice identifier list, corresponding to slice_id information in a point cloud slice track. |

M (Mandatory) represents a mandatory field; CM (Conditional Mandatory) represents conditional mandatory; and O (Optional) represents an optional field. component@contained_slice_ids is a point cloud slice identifier list added to a component descriptor.

S102: Decode the point cloud bitstream based on the point cloud slice indication information.

Based on the description in S101, when the media file resource requested by the client includes all point cloud slice tracks, a to-be-decoded point cloud bitstream is a complete point cloud bitstream (including all point cloud slices); or when the media file resource requested by the client includes only some point cloud slice tracks, a to-be-decoded point cloud bitstream is a partial point cloud bitstream (including some point cloud slices).

In the embodiments of this application, partial decoding of point cloud media can be supported, thereby saving computing resources. Assuming that the W point cloud slice tracks obtained by the client include the point cloud slice track Tᵢ, for ease of understanding, using the point cloud slice track Tᵢ as an example for description, a process of decoding a data stream corresponding to another point cloud slice track is similar thereto. The specific process may be as follows: When decapsulating the media file resource, the client may parse metadata information at a file layer carried by the media file resource. The metadata information may include point cloud slice encapsulation information included in the point cloud slice track Tᵢ (for example, the point cloud slice encapsulation information indicates a point cloud slice specifically included in the point cloud slice track Tᵢ). Further, a to-be-decoded point cloud slice may be determined, based on the point cloud slice encapsulation information, from a point cloud slice included in the point cloud slice track Tᵢ. For example, assuming that the point cloud slice encapsulation information indicates that the point cloud slice track Tᵢ includes a point cloud slice A1 in a sample 1 and a point cloud slice A2 in a sample 2, the client may select one point cloud slice adaptively or based on a user requirement for decoding. Then, the client may decode the to-be-decoded point cloud slice based on point cloud slice indication information related to the to-be-decoded point cloud slice, to implement partial decoding.

A specific process of determining, based on the point cloud slice encapsulation information, the to-be-decoded point cloud slice from the point cloud slice included in the point cloud slice track Tᵢ may be as follows: When the point cloud slice encapsulation information indicates that a target sample in the point cloud slice track Tᵢ does not include a point cloud slice, the client may not decode the target sample, but determine the to-be-decoded point cloud slice from a sample other than the target sample. In other words, the client can skip decoding an empty sample based on the point cloud slice encapsulation information, thereby reducing a waste of decoding resources.

In addition, in the embodiments of this application, a corresponding start code and end code are further defined. A start code is a group of specific bit strings. These bit strings cannot exist in a bitstream that conforms to this part other than the start code. A start code may include a start code prefix and a start code value. The start code prefix is the bit string '0000 0000 0000 0000 0000 0001'. All start codes have to be byte-aligned. The start code value is an 8-bit integer and may indicate a type of the start code. Refer to Table 18. Table 18 shows a start code value list of point cloud media provided in the embodiments of this application:

**Table 18**

| Start code type | Start code value (hexadecimal) |
|---|---|
| Patch start code (patch_start_code) | 00-7F |
| Reserved | 80-8E |
| Patch end code (patch_end_code) | 8F |
| Reserved | 90-AF |
| Video sequence start code (video_sequence_start_code) | B0 |
| Video sequence end code (video_sequence_end_code) | B1 |
| User data start code (user_data_start_code) | B2 |
| Intra-frame predicted picture start code (intra_picture_start_code) | B3 |
| Intra-frame predicted picture end code (intra_picture_end_code) | B4 |
| Video extension start code (extension_start_code) | B5 |
| Inter-frame predicted picture start code (inter_picture_start_code) | B6 |
| Video edit code (video_edit_code) | B7 |
| Inter-frame predicted picture end code (inter_picture_end_code) | B8 |
| Frame start code (picture_start_code) | B9 |
| Frame end code (picture_end_code) | BA |
| System start code | BB-FF |

In the embodiments of this application, a point cloud frame may be a frame indicated by a start code and an end code together. The start code may be any one of a frame start code (picture_start_code), an intra-frame predicted picture start code (intra_picture_start_code), or an inter-frame predicted picture start code (inter_picture_start_code). Correspondingly, the end code may be a frame end code (picture_end_code) corresponding to the frame start code, an intra-frame predicted picture end code (intra_picture_end_code) corresponding to the intra-frame predicted picture start code, or an inter-frame predicted picture end code (inter_picture_end_code) corresponding to the inter-frame predicted picture start code. Only one group of the start code and the end code is required for distinguishing one point cloud frame. In addition, the start code and the end code that correspond to the point cloud frame may alternatively be other representations in Table 18. Details are not described herein.

Based on the above, for one or more point cloud slices in a point cloud frame, in the embodiments of this application, a corresponding bitstream high-level syntactic element (for example, point cloud slice indication information) is extended to distinguish different point cloud slices of different point cloud frames and to support differentiated encoding optimization on point cloud slices. In addition, for a multi-track encapsulation mode based on point cloud slices, in the embodiments of this application, metadata information (such as point cloud slice encapsulation information, a signaling message, and point cloud slice indication information) necessary for track transmission and sample decoding is indicated. By the method provided in this application, decoding, transmission, and presentation of point cloud media can be better guided, and transmission bandwidth and computing resources can be saved, thereby improving decoding and presentation efficiency of the point cloud media.

Further, refer to FIG. 5. FIG. 5 is a schematic flowchart of an immersive media data processing method according to an embodiment of this application. The method may be performed by a content production device (for example, the content production device 100A in the embodiment corresponding to FIG. 3) in an immersive media system. For example, the content production device may be a server. This embodiment of this application is described by using a server as an example. The method may include at least the following operations S201 and S202:

S201: Encode point cloud data to obtain a point cloud bitstream.

Specifically, the server may obtain point cloud data of a real-world three-dimensional object or scene by using a capture device (for example, a camera array including a plurality of cameras), or the server may generate point cloud data of a virtual three-dimensional object or scene. The point cloud data may express a spatial structure and a surface attribute (such as color or material) of the corresponding three-dimensional object or scene. Further, the server may encode the obtained point cloud data to obtain a point cloud bitstream. The point cloud bitstream includes a plurality of point cloud frames and point cloud slice indication information. The point cloud slice indication information may indicate each of M point cloud slices included in a point cloud frame in the point cloud bitstream, where M is a positive integer.

In some embodiments, before encoding the point cloud data, the server needs to perform specific processing on the point cloud data, for example, perform cutting and mapping. The server may encode the point cloud data in a specific encoding manner. The encoding manner may be, for example, geometry-based point cloud compression (GPCC) or another encoding manner. This is not limited in the embodiments of this application. In addition, as different point cloud slices in different point cloud frames are distinguished in the embodiments of this application, the server can be supported to perform differentiated encoding optimization on point cloud slices. For example, some additional parameters may be defined at each point cloud slice level to achieve a gain. A specific manner of differentiated encoding is not limited in this application.

The point cloud slice indication information may be added by the server to high-level syntax of the point cloud bitstream. For specific content and indication manners, refer to the relevant description of S101 in the embodiment corresponding to FIG. 4. Details are not described herein again.

S202: Encapsulate the point cloud bitstream based on the point cloud slice indication information into a media file resource of immersive media.

Specifically, the server may perform file encapsulation on the point cloud bitstream in a first encapsulation mode or a second encapsulation mode. In one embodiment, if file encapsulation is performed on the point cloud bitstream in the first encapsulation mode (that is, file encapsulation is performed based on a point cloud slice), it is assumed that M point cloud slices in a point cloud frame are encapsulated in T point cloud slice tracks, T being a positive integer, and the T point cloud slice tracks include a point cloud slice track Tᵢ, i being a positive integer less than or equal to T. The point cloud slice track Tᵢ is used as an example for description. The specific encapsulation process may be as follows: The server may generate point cloud slice encapsulation information corresponding to the point cloud slice track Tᵢ based on point cloud slice indication information related to a point cloud slice included in the point cloud slice track Tᵢ. The point cloud slice encapsulation information belongs to metadata information related to the point cloud bitstream (other metadata information required for track transmission may also be included). Further, the server may encapsulate the metadata information and the T point cloud slice tracks into the media file resource of the immersive media.

The point cloud slice encapsulation information may be added by the server to a corresponding data box. For specific content and indication manners, refer to the relevant description of S101 in the embodiment corresponding to FIG. 4. Details are not described herein again.

In one embodiment, if file encapsulation is performed on the point cloud bitstream in the second encapsulation mode (that is, file encapsulation is performed not based on a point cloud slice), the server may indicate point cloud slice encapsulation information corresponding to each point cloud slice track by using a subsample information data box. The point cloud slice encapsulation information belongs to metadata information related to the point cloud bitstream (other metadata information required for track transmission may also be included). Then, the server may encapsulate the metadata information and the corresponding point cloud slice track into the media file resource of the immersive media.

Further, the server may transmit the media file resource of the immersive media to the client. If file encapsulation is performed in the first encapsulation mode, a corresponding signaling message may be added to describe relevant information of a point cloud slice in a corresponding data stream. For specific content and indication manners of the signaling message, refer to the relevant description of S101 in the embodiment corresponding to FIG. 4. Details are not described herein again.

When the client requests data streams corresponding to some point cloud slice tracks based on the received signaling message, the media file resource transmitted by the server to the client includes only some point cloud slice tracks.

Based on this, the server may encode obtained point cloud data to obtain a corresponding point cloud bitstream, the point cloud bitstream carrying point cloud slice indication information, then may encapsulate the point cloud bitstream based on the point cloud slice indication information, and may transmit a media file resource requested by the client to the client for consumption. As the point cloud slice indication information can indicate each of M point cloud slices included in a point cloud frame in the point cloud bitstream, different point cloud slices in different point cloud frames can be effectively differentiated, so that encoding and file encapsulation based on the point cloud slices can be implemented. In addition, in the embodiments of this application, decoding, transmission, and presentation of point cloud media can be better guided based on the point cloud slices, thereby improving decoding and presentation efficiency of the point cloud media.

Further, FIG. 6 is a schematic diagram of an immersive media data processing scenario according to an embodiment of this application. As shown in FIG. 6, the server may encode collected point cloud data, generate a corresponding point cloud bitstream, and add point cloud slice indication information in high-level syntax of the point cloud bitstream. A geometry header, an attribute header, and a point cloud slice of each point cloud frame all carry a corresponding frame_id field to identify the corresponding point cloud frame. For example, assuming that the point cloud bitstream includes a total of N point cloud frames, a value of the gps_multi_slice_flag field of a point cloud frame 2 is 0, each of values of gps_multi_slice_flag of the other point cloud frames is 1, and gps_num_slice_minus_one = 1. In other words, the point cloud frame 2 includes only one point cloud slice, and each of the other point cloud frames includes two point cloud slices.

Further, the server may perform file encapsulation on the point cloud bitstream in a manner of file encapsulation based on a point cloud slice (namely, the first encapsulation mode). The corresponding point cloud slice encapsulation information is as follows: Track1 (point cloud slice track 1): dynamic_num_slices_flag = 0; max_num_slice_ids = 1; slice_id = 1 (that is, change status of point cloud slice encapsulation information corresponding to the point cloud slice track 1 is a static state, and each sample includes one point cloud slice of slice_id = 1). Track2 (point cloud slice track 2): dynamic_num_slices_flag = 1; max_num_slice_ids = 1; slice_id = 2 (that is, change status of point cloud slice encapsulation information corresponding to the point cloud slice track 2 is a dynamic state, and each sample includes at most one point cloud slice of slice_id = 2). In AvsPccSliceInfoEntry (namely, a point cloud slice information sample group entry) of Track2, num_slices corresponding to a sample 2 is equal to 0. Corresponding to the other samples, num_slices = 1 and slice_id = 2. In other words, in the point cloud slice track 2, the sample 2 only excludes a point cloud slice, and each of the other samples includes one point cloud slices of slice_id = 2.

Then, the server may transmit a corresponding signaling message (also referred to as a signaling file) to the client. The signaling message includes: Representation1 (data stream 1 corresponding to the point cloud slice track 1): slice_id = 1; and Representation2 (data stream 2 corresponding to the point cloud slice track 2): slice_id = 2. Representation1 and Representation2 respectively correspond to track1 and track2.

Further, the client may request a corresponding data stream based on the signaling message. When decapsulating and decoding an obtained point cloud file/file segment, the client may decode a corresponding point cloud slice based on a user requirement and point cloud slice indication information, to implement partial transmission and partial decoding.

In particular, corresponding to track2, it can be learned based on information about the sample 2 indicated in AvsPccSliceInfoEntry that the sample 2 includes no point cloud slice, so that the client can skip decoding the sample 2 during presentation.

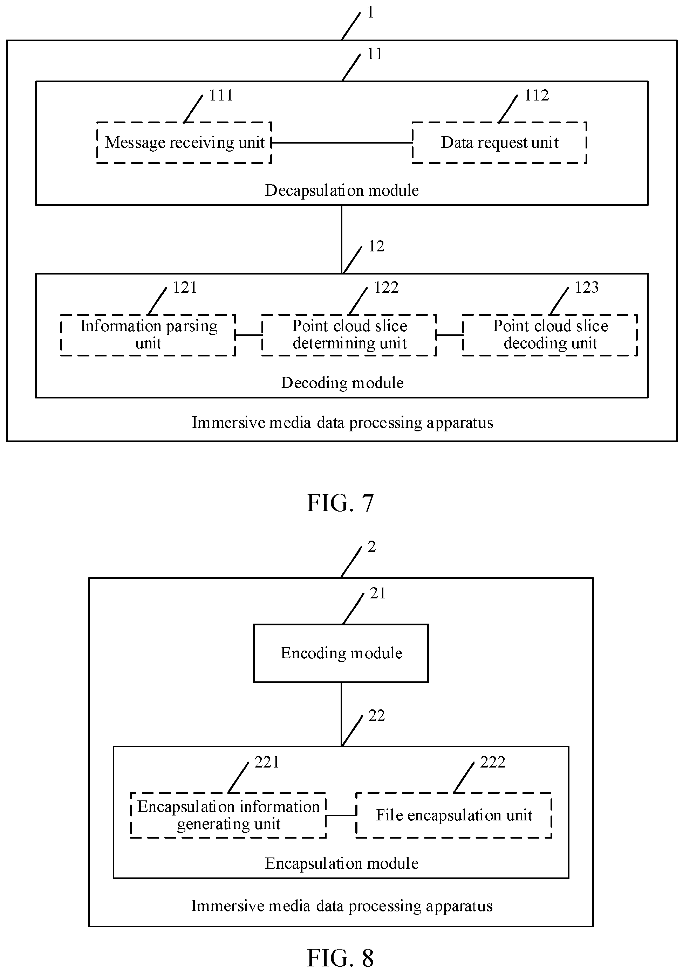

FIG. 7 is a schematic diagram of a structure of an immersive media data processing apparatus according to an embodiment of this application. The immersive media data processing apparatus may be a computer program (including program code) run in a content consumption device. For example, the immersive media data processing apparatus is application software in a content consumption device. The apparatus may be configured to perform corresponding operations in the immersive media data processing method provided in the embodiments of this application. As shown in FIG. 7, the immersive media data processing apparatus 1 may include: a decapsulation module 11 and a decoding module 12. The decapsulation module 11 is configured to obtain a media file resource of immersive media, and decapsulate the media file resource to obtain a point cloud bitstream, the point cloud bitstream including a plurality of point cloud frames and point cloud slice indication information, the point cloud slice indication information indicating each of M point cloud slices included in a point cloud frame, and M being a positive integer.

In an implementation, the point cloud slice indication information includes a first point cloud frame identification field, a multi-point cloud slice identification field, and a point cloud slice number indication field, and the first point cloud frame identification field, the multi-point cloud slice identification field, and the point cloud slice number indication field are all added in a geometry header corresponding to the point cloud frame; the first point cloud frame identification field indicates an identifier of the point cloud frame; the multi-point cloud slice identification field indicates that the point cloud frame includes one or more point cloud slices; and when a value of the multi-point cloud slice identification field is a first flag value, the point cloud frame includes a plurality of point cloud slices, M is a positive integer greater than 1, and a difference between a number of the plurality of point cloud slices and a field value of the point cloud slice number indication field is X, X being a non-negative integer; or when a value of the multi-point cloud slice identification field is a second flag value, the point cloud frame includes one point cloud slice, and M is equal to 1.

In an implementation, the point cloud slice indication information includes a second point cloud frame identification field, the second point cloud frame identification field is added in an attribute header corresponding to the point cloud frame, and the second point cloud frame identification field indicates an identifier of the point cloud frame.

In an implementation, the point cloud slice indication information includes a third point cloud frame identification field, the third point cloud frame identification field is added in a geometry slice header related to the point cloud frame, and the third point cloud frame identification field indicates an identifier of the point cloud frame to which a target point cloud slice corresponding to the geometry slice header belongs, the target point cloud slice belonging to the M point cloud slices.

In an implementation, the geometry slice header includes a first point cloud slice identification field indicating the target point cloud slice; and when the geometry slice header is added in general geometry data bitstream information related to the target point cloud slice, the geometry slice header is associated with geometry data corresponding to the target point cloud slice; or when the first point cloud slice identification field indicating the target point cloud slice exists in geometry data corresponding to the target point cloud slice, the geometry slice header is associated with the geometry data.

In an implementation, the point cloud slice indication information further includes a fourth point cloud frame identification field, the fourth point cloud frame identification field is added in an attribute slice header related to the point cloud frame, and the fourth point cloud frame identification field indicates an identifier of the point cloud frame to which a target point cloud slice corresponding to the attribute slice header belongs, the target point cloud slice belonging to the M point cloud slices; and when a value of the multi-point cloud slice identification field is the first flag value, the attribute slice header further includes a reflectance attribute quantization parameter offset.

In an implementation, the attribute slice header includes a second point cloud slice identification field indicating the target point cloud slice; and when the attribute slice header is added in general attribute data bitstream information related to the target point cloud slice, the attribute slice header is associated with attribute data corresponding to the target point cloud slice; or when the second point cloud slice identification field indicating the target point cloud slice exists in attribute data corresponding to the target point cloud slice, the attribute slice header is associated with the attribute data.

The decapsulation module 11 may include: a message receiving unit 111 and a data request unit 112. The message receiving unit 111 is configured to receive a signaling message transmitted by a server, the signaling message being generated by the server based on the point cloud slice encapsulation information included in the point cloud slice track Tᵢ, the signaling message including a point cloud slice identifier list corresponding to the point cloud slice track Tᵢ, and the point cloud slice identifier list including an identifier of a point cloud slice included in the point cloud slice track Tᵢ, and the point cloud slice identifier list being configured for being added to a separate point cloud slice identifier descriptor or to a component descriptor related to the point cloud slice track Tᵢ. The data request unit 112 is configured to request the media file resource of the immersive media based on the signaling message, the media file resource including data streams corresponding to W point cloud slice tracks, and W being a positive integer less than or equal to T.

For specific implementations of the message receiving unit 111 and the data request unit 112, refer to S101 in the embodiment corresponding to FIG. 4. Details are not described herein again.

The decoding module 12 is configured to decode the point cloud bitstream based on the point cloud slice indication information.

The W point cloud slice tracks include the point cloud slice track Tᵢ. The decoding module 12 may include: an information parsing unit 121, a point cloud slice determining unit 122, and a point cloud slice decoding unit 123. The information parsing unit 121 is configured to parse metadata information carried by the media file resource, the metadata information including the point cloud slice encapsulation information included in the point cloud slice track Tᵢ. The point cloud slice determining unit 122 is configured to determine, based on the point cloud slice encapsulation information, a to-be-decoded point cloud slice from a point cloud slice included in the point cloud slice track Tᵢ. The point cloud slice determining unit 122 is specifically configured to skip, when the point cloud slice encapsulation information indicates that a target sample in the point cloud slice track Tᵢ does not include a point cloud slice, decoding the target sample, and determine the to-be-decoded point cloud slice from a sample other than the target sample. The point cloud slice decoding unit 123 is configured to decode the to-be-decoded point cloud slice based on point cloud slice indication information related to the to-be-decoded point cloud slice.

For specific implementations of the information parsing unit 121, the point cloud slice determining unit 122, and the point cloud slice decoding unit 123, refer to S102 in the embodiment corresponding to FIG. 4. Details are not described herein again.

In an implementation, the M point cloud slices in the point cloud frame are encapsulated in T point cloud slice tracks, T being a positive integer; the T point cloud slice tracks include a point cloud slice track Tᵢ, i being a positive integer less than or equal to T; and the media file resource includes a point cloud slice track sample entry corresponding to the point cloud slice track Tᵢ, and the point cloud slice track sample entry indicates point cloud slice encapsulation information included in the point cloud slice track Tᵢ.

In an implementation, the point cloud slice track sample entry includes a point cloud slice information dynamic identification field, a track point cloud slice maximum number indication field, and a third point cloud slice identification field; the point cloud slice information dynamic identification field indicates change status of the point cloud slice encapsulation information in the point cloud slice track Tᵢ; the track point cloud slice maximum number indication field indicates a number of point cloud slices included in a maximum number sample in the point cloud slice track Tᵢ, the maximum number sample is a sample with a maximum number of point cloud slices included in the point cloud slice track Tᵢ, and a value of the track point cloud slice maximum number indication field is N1, N1 being a positive integer; the third point cloud slice identification field indicates an identifier of a point cloud slice included in each sample in the point cloud slice track Tᵢ; and when a value of the point cloud slice information dynamic identification field is a third flag value, the change status of the point cloud slice encapsulation information is a static state, and N1 point cloud slices exist in each sample in the point cloud slice track Tᵢ; or when a value of the point cloud slice information dynamic identification field is a fourth flag value, the change status of the point cloud slice encapsulation information is a dynamic state, and at most N1 point cloud slices exist in each sample in the point cloud slice track Tᵢ.

In an implementation, when the change status of the point cloud slice encapsulation information is the dynamic state, the media file resource further includes a point cloud slice information sample group entry corresponding to the point cloud slice track Tᵢ, the point cloud slice information sample group entry includes a point cloud slice presence identification field, and the point cloud slice presence identification field indicates presence or absence of a point cloud slice in a sample of the point cloud slice track Tᵢ; when the point cloud bitstream includes S point cloud frames, the point cloud slice track Tᵢ includes S samples, S being a positive integer; the S samples include a sample Sⱼ, j being a positive integer less than or equal to S; when a value of a point cloud slice presence identification field corresponding to the sample Sⱼ is a fifth flag value, the sample Sⱼ belongs to a first sample group, a point cloud slice exists in each sample included in the first sample group, and point cloud slice encapsulation information included in each sample in the first sample group is indicated by a subsample information data box; or when a value of a point cloud slice presence identification field corresponding to the sample Sⱼ is a sixth flag value, the sample Sⱼ belongs to a second sample group, and no point cloud slice exists in each sample included in the second sample group.

In an implementation, the point cloud slice track sample entry includes a point cloud slice information dynamic identification field, and the point cloud slice information dynamic identification field indicates change status of the point cloud slice encapsulation information in the point cloud slice track Tᵢ; when a value of the point cloud slice information dynamic identification field is a third flag value, the change status of the point cloud slice encapsulation information is a static state; a point cloud slice track sample entry indicating static point cloud slice encapsulation information further includes a first track point cloud slice number indication field and a fourth point cloud slice identification field; the first track point cloud slice number indication field indicates a number of point cloud slices included in each sample in the point cloud slice track Tᵢ, and when a value of the first track point cloud slice number indication field is K1, K1 point cloud slices exist in each sample in the point cloud slice track Tᵢ, K1 being a positive integer; and the fourth point cloud slice identification field indicates an identifier of a point cloud slice included in each sample in the point cloud slice track Tᵢ.

In an implementation, when a value of the point cloud slice information dynamic identification field is a fourth flag value, the change status of the point cloud slice encapsulation information is a dynamic state; the dynamic state indicates that samples in the point cloud slice track Tᵢ include not exactly the same numbers of point cloud slices; the media file resource further includes a point cloud slice information sample group entry indicating dynamic point cloud slice encapsulation information, and the point cloud slice information sample group entry includes a second track point cloud slice number indication field and a fifth point cloud slice identification field; when the point cloud bitstream includes S point cloud frames, the point cloud slice track Tᵢ includes S samples, S being a positive integer; the S samples include a sample Sⱼ, j being a positive integer less than or equal to S; the second track point cloud slice number indication field indicates a number of point cloud slices included in the sample Sⱼ in the point cloud slice track Tᵢ; and when the number of the point cloud slices included in the sample Sⱼ is greater than 0, the fifth point cloud slice identification field indicates an identifier of a point cloud slice included in the sample Sⱼ.

In an implementation, the M point cloud slices in the point cloud frame are classified into H point cloud tiles, H being a positive integer less than or equal to M; the H point cloud tiles are encapsulated in G point cloud tile tracks, G being a positive integer; the G point cloud tile tracks include a point cloud tile track Gₚ, p being a positive integer less than or equal to G; and the media file resource includes a point cloud tile track sample entry corresponding to the point cloud tile track Gₚ, and the point cloud tile track sample entry indicates point cloud tile encapsulation information included in the point cloud tile track Gₚ.

In an implementation, the point cloud tile track sample entry includes a point cloud tile information dynamic identification field, a track point cloud tile maximum number indication field, and a first point cloud tile identification field; the point cloud tile information dynamic identification field indicates change status of the point cloud tile encapsulation information in the point cloud tile track Gₚ; the track point cloud tile maximum number indication field indicates a number of point cloud tiles included in a maximum number sample in the point cloud tile track Gₚ, the maximum number sample is a sample with a maximum number of point cloud tiles included in the point cloud tile track Gₚ, and a value of the track point cloud tile maximum number indication field is N2, N2 being a positive integer; the first point cloud tile identification field indicates an identifier of a point cloud tile included in each sample in the point cloud tile track Gₚ; and when a value of the point cloud tile information dynamic identification field is a seventh flag value, the change status of the point cloud tile encapsulation information is a static state, and N2 point cloud tiles exist in each sample in the point cloud tile track Gₚ; or when a value of the point cloud tile information dynamic identification field is an eighth flag value, the change status of the point cloud tile encapsulation information is a dynamic state, and at most N2 point cloud tiles exist in each sample in the point cloud tile track Gₚ.

In an implementation, when the change status of the point cloud tile encapsulation information is the dynamic state, the media file resource further includes a point cloud tile information sample group entry corresponding to the point cloud tile track Gₚ, the point cloud tile information sample group entry includes a point cloud tile presence identification field, and the point cloud tile presence identification field indicates presence or absence of a point cloud tile in a sample of the point cloud tile track Gₚ; when the point cloud bitstream includes S point cloud frames, the point cloud tile track Gₚ includes S samples, S being a positive integer; the S samples include a sample Sⱼ, j being a positive integer less than or equal to S; and when a value of a point cloud tile presence identification field corresponding to the sample Sⱼ is a ninth flag value, the sample Sⱼ belongs to a third sample group, a point cloud tile exists in each sample included in the third sample group, and point cloud tile encapsulation information included in each sample in the third sample group is indicated by a subsample information data box; or when a value of a point cloud tile presence identification field corresponding to the sample Sⱼ is a tenth flag value, the sample Sⱼ belongs to a fourth sample group, and no point cloud tile exists in each sample included in the fourth sample group.

In an implementation, the point cloud tile track sample entry includes a point cloud tile information dynamic identification field, and the point cloud tile information dynamic identification field indicates change status of the point cloud tile encapsulation information in the point cloud tile track Gₚ; when a value of the point cloud tile information dynamic identification field is a seventh flag value, the change status of the point cloud tile encapsulation information is a static state; a point cloud tile track sample entry indicating static point cloud tile encapsulation information further includes a first track point cloud tile number indication field and a second point cloud tile identification field; the first track point cloud tile number indication field indicates a number of point cloud tiles included in each sample in the point cloud tile track Gₚ, and when a value of the first track point cloud tile number indication field is K2, K2 point cloud tiles exist in each sample in the point cloud tile track Gₚ, K2 being a positive integer; and the second point cloud tile identification field indicates an identifier of a point cloud tile included in each sample in the point cloud tile track Gₚ.

In an implementation, when a value of the point cloud tile information dynamic identification field is an eighth flag value, the change status of the point cloud tile encapsulation information is a dynamic state; the dynamic state indicates that samples in the point cloud tile track Gₚ include not exactly the same numbers of point cloud tiles; the media file resource further includes a point cloud tile information sample group entry indicating dynamic point cloud tile encapsulation information, and the point cloud tile information sample group entry includes a second track point cloud tile number indication field and a third point cloud tile identification field; when the point cloud bitstream includes S point cloud frames, the point cloud tile track Gₚ includes S samples, S being a positive integer; the S samples include a sample Sⱼ, j being a positive integer less than or equal to S; the second track point cloud tile number indication field indicates a number of point cloud tiles included in the sample Sⱼ in the point cloud tile track Gₚ; and when the number of the point cloud tiles included in the sample Sⱼ is greater than 0, the third point cloud tile identification field indicates an identifier of a point cloud tile included in the sample Sⱼ.

In an implementation, the subsample information data box includes a component data indication field; when component data of a target point cloud slice exists in a subsample of the point cloud slice track Tᵢ, the component data indication field indicates a data volume of the component data included in the subsample, the target point cloud slice belonging to the M point cloud slices, and the target point cloud slice being encapsulated in the point cloud slice track Tᵢ; and when a value of the component data indication field is a first field value, the subsample includes all of the component data of the target point cloud slice; or when a value of the component data indication field is a second field value, the subsample includes a part of the component data of the target point cloud slice.

In an implementation, when a component information data box exists in the point cloud slice track Tᵢ, a subsample of the point cloud slice track Tᵢ includes component data corresponding to the component information data box; or when no component information data box exists in the point cloud slice track Tᵢ, a subsample of the point cloud slice track Tᵢ includes all component data of a target point cloud slice, the target point cloud slice belonging to the M point cloud slices, and the target point cloud slice being encapsulated in the point cloud slice track Tᵢ.

In an implementation, a point cloud frame may be a frame indicated by a start code and an end code together. The start code is any one of a frame start code, an intra-frame predicted picture start code, or an inter-frame predicted picture start code. The end code may be a frame end code corresponding to the frame start code, an intra-frame predicted picture end code corresponding to the intra-frame predicted picture start code, or an inter-frame predicted picture end code corresponding to the inter-frame predicted picture start code.

For specific implementations of the decapsulation module 11 and the decoding module 12, refer to S101 and S102 in the embodiment corresponding to FIG. 4. Details are not described herein again. In addition, beneficial effects of the same method are not described herein again.

FIG. 8 is a schematic diagram of a structure of an immersive media data processing apparatus according to an embodiment of this application. The immersive media data processing apparatus may be a computer program (including program code) run in a content production device. For example, the immersive media data processing apparatus is application software in a content production device. The apparatus may be configured to perform corresponding operations in the immersive media data processing method provided in the embodiments of this application. As shown in FIG. 8, the immersive media data processing apparatus 2 may include: an encoding module 21 and an encapsulation module 22. The encoding module 21 is configured to encode point cloud data to obtain a point cloud bitstream, the point cloud bitstream including a plurality of point cloud frames and point cloud slice indication information, the point cloud slice indication information indicating each of M point cloud slices included in a point cloud frame, and M being a positive integer. The encapsulation module 22 is configured to encapsulate the point cloud bitstream based on the point cloud slice indication information into a media file resource of immersive media.

The M point cloud slices in the point cloud frame are encapsulated in T point cloud slice tracks, T being a positive integer; and the T point cloud slice tracks include a point cloud slice track Tᵢ, i being a positive integer less than or equal to T. The encapsulation module 22 may include: an encapsulation information generating unit 221 and a file encapsulation unit 222. The encapsulation information generating unit 221 is configured to generate point cloud slice encapsulation information corresponding to the point cloud slice track Tᵢ based on point cloud slice indication information related to a point cloud slice included in the point cloud slice track Tᵢ, the point cloud slice encapsulation information belonging to metadata information related to the point cloud bitstream. The file encapsulation unit 222 is configured to encapsulate the metadata information and the T point cloud slice tracks into the media file resource of the immersive media.

For specific implementations of the encapsulation information generating unit 221 and the file encapsulation unit 222, refer to S202 in the embodiment corresponding to FIG. 5. Details are not described herein again.

For specific implementations of the encoding module 21 and the encapsulation module 22, refer to S201 and S202 in the embodiment corresponding to FIG. 5. Details are not described herein again. In addition, beneficial effects of the same method are not described herein again.

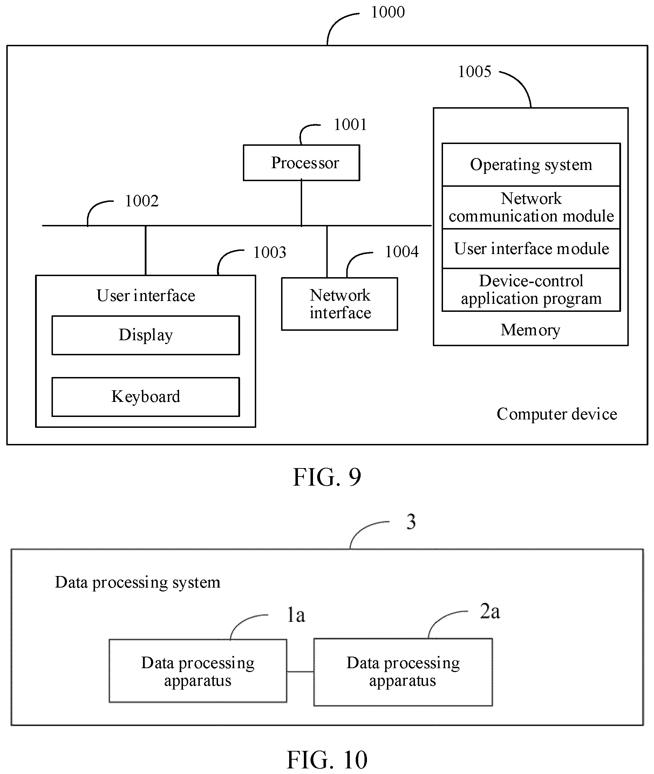

FIG. 9 is a schematic diagram of a structure of a computer device according to an embodiment of this application. As shown in FIG. 9, the computer device 1000 may include: a processor 1001, a network interface 1004, and a memory 1005. In addition, the computer device 1000 may further include: a user interface 1003 and at least one communication bus 1002. The communication bus 1002 is configured to implement connection and communication between these components. The user interface 1003 may include a display and a keyboard. In one embodiment, the user interface 1003 may further include a standard wired interface and wireless interface. In one embodiment, the network interface 1004 may include a standard wired interface and wireless interface (for example, a Wi-Fi interface). The memory 1005 may be a high-speed RAM memory, or may be a non-volatile memory, for example, at least one magnetic disk memory. In one embodiment, the memory 1005 may alternatively be at least one storage apparatus located away from the processor 1001. As shown in FIG. 9, the memory 1005 used as a computer-readable storage medium may include an operating system, a network communication module, a user interface module, and a device-control application program.

In the computer device 1000 shown in FIG. 9, the network interface 1004 may provide a network communication function; the user interface 1003 is mainly configured to provide an input interface for a user; and the processor 1001 may be configured to call the device-control application program stored in the memory 1005, to perform the immersive media data processing method in any one of the embodiments corresponding to FIG. 4 and FIG. 5. Details are not described herein again. In addition, beneficial effects of the same method are not described herein again.

In addition, an embodiment of this application further provides a computer-readable storage medium, the computer-readable storage medium stores the computer program executed by the immersive media data processing apparatus 1 or the immersive media data processing apparatus 2, and the computer program includes program instructions. When a processor executes the program instructions, the immersive media data processing method in any one of the embodiments corresponding to FIG. 4 and FIG. 5 can be performed. Details are not described herein again. In addition, beneficial effects of the same method are not described herein again. For technical details that are not disclosed in the computer-readable storage medium embodiments involved in this application, refer to the descriptions of the method embodiments of this application.

The computer-readable storage medium may be an internal storage unit of the immersive media data processing apparatus or the computer device provided in any one of the foregoing embodiments, for example, a hard disk or an internal memory of the computer device. The computer-readable storage medium may alternatively be an external storage device of the computer device, for example, a plug-in hard disk, a smart media card (SMC), a secure digital (SD) card, a flash card, or the like that is equipped on the computer device. Further, the computer-readable storage medium may include both the internal storage unit and the external storage device of the computer device. The computer-readable storage medium is configured to store the computer program and another program and data required for the computer device. The computer-readable storage medium may be further configured to temporarily store data that has been outputted or that is to be outputted.

In addition, an embodiment of this application further provides a computer program product or a computer program. The computer program product or the computer program includes computer instructions. The computer instructions are stored in a computer-readable storage medium. A processor of a computer device reads the computer instructions from the computer-readable storage medium. The processor executes the computer instructions to enable the computer device to perform the method provided in any one of the embodiments corresponding to FIG. 4 and FIG. 5. In addition, beneficial effects of the same method are not described herein again. For technical details that are not disclosed in the computer program product or computer program embodiments involved in this application, refer to the descriptions of the method embodiments of this application.

Further, refer to FIG. 10. FIG. 10 is a schematic diagram of a structure of a data processing system according to an embodiment of this application. The data processing system 3 may include a data processing apparatus 1a and a data processing apparatus 2a. The data processing apparatus 1a may be the immersive media data processing apparatus 1 in the embodiment corresponding to FIG. 7. The data processing apparatus 1a may be integrated in the content consumption device 100B in the embodiment corresponding to FIG. 3. Details are not described herein again. The data processing apparatus 2a may be the immersive media data processing apparatus 2 in the embodiment corresponding to FIG. 8. The data processing apparatus 2a may be integrated in the content production device 100A in the embodiment corresponding to FIG. 3. Details are not described herein again. In addition, beneficial effects of the same method are not described herein again. For technical details that are not disclosed in the data processing system embodiments involved in this application, refer to the descriptions of the method embodiments of this application.

In the specification, claims, and accompanying drawings of the embodiments of this application, the terms "first", "second", and the like are intended to distinguish different objects and are not intended to describe a specific sequence. In addition, the terms "include" and any variant thereof are intended to cover a non-exclusive inclusion. For example, a process, method, apparatus, product, or device that includes a series of operations or units is not limited to the listed operations or modules, and further includes an operation or a module that is not listed, or further includes another operation or unit that is intrinsic to the process, method, apparatus, product, or device.

A person of ordinary skill in the art may be aware that, units and algorithm operations of the examples described in the embodiments disclosed in this specification can be implemented by electronic hardware, computer software, or a combination thereof. To clearly describe the interchangeability between the hardware and the software, the foregoing has generally described compositions and operations of each example based on functions. Whether the functions are performed by hardware or software depends on particular applications and design constraints of the technical solutions. A person skilled in the art may use different methods to implement the described functions for each particular application, but it is not to be considered that the implementation goes beyond the scope of this application.

What is disclosed above is merely preferred embodiments of this application, and certainly is not intended to limit the scope of the claims of this application. Therefore, equivalent variations made in accordance with the claims of this application shall fall within the scope of this application.

## Claims

1. An immersive media data processing method, performed by a computer device, the method comprising:
obtaining a media file resource of immersive media;
decapsulating the media file resource to obtain a point cloud bitstream, the point cloud bitstream comprising a plurality of point cloud frames and point cloud slice indication information, the point cloud slice indication information indicating each of M point cloud slices comprised in a point cloud frame, and M being a positive integer; and
decoding the point cloud bitstream based on the point cloud slice indication information.

2. The method according to claim 1, wherein the point cloud slice indication information comprises a first point cloud frame identification field, a multi-point cloud slice identification field, and a point cloud slice number indication field, and the first point cloud frame identification field, the multi-point cloud slice identification field, and the point cloud slice number indication field are all added in a geometry header corresponding to the point cloud frame; the first point cloud frame identification field indicates an identifier of the point cloud frame; the multi-point cloud slice identification field indicates that the point cloud frame comprises one or more point cloud slices; and
when a value of the multi-point cloud slice identification field is a first flag value, the point cloud frame comprises a plurality of point cloud slices, M is a positive integer greater than 1, and a difference between a number of the plurality of point cloud slices and a field value of the point cloud slice number indication field is X, X being a non-negative integer; or
when a value of the multi-point cloud slice identification field is a second flag value, the point cloud frame comprises one point cloud slice, and M is equal to 1.

3. The method according to claim 1 or 2, wherein the point cloud slice indication information comprises a second point cloud frame identification field, the second point cloud frame identification field is added in an attribute header corresponding to the point cloud frame, and the second point cloud frame identification field indicates an identifier of the point cloud frame.

4. The method according to any one of claims 1 to 3, wherein the point cloud slice indication information comprises a third point cloud frame identification field, the third point cloud frame identification field is added in a geometry slice header related to the point cloud frame, and the third point cloud frame identification field indicates an identifier of the point cloud frame to which a target point cloud slice corresponding to the geometry slice header belongs, the target point cloud slice belonging to the M point cloud slices.

5. The method according to claim 4, wherein the geometry slice header comprises a first point cloud slice identification field indicating the target point cloud slice; and
when the geometry slice header is added in general geometry data bitstream information related to the target point cloud slice, the geometry slice header is associated with geometry data corresponding to the target point cloud slice; or
when the first point cloud slice identification field indicating the target point cloud slice exists in geometry data corresponding to the target point cloud slice, the geometry slice header is associated with the geometry data.

6. The method according to any one of claims 2 to 5, wherein the point cloud slice indication information further comprises a fourth point cloud frame identification field, the fourth point cloud frame identification field is added in an attribute slice header related to the point cloud frame, and the fourth point cloud frame identification field indicates an identifier of the point cloud frame to which a target point cloud slice corresponding to the attribute slice header belongs, the target point cloud slice belonging to the M point cloud slices; and
when a value of the multi-point cloud slice identification field is the first flag value, the attribute slice header further comprises a reflectance attribute quantization parameter offset.

7. The method according to claim 6, wherein the attribute slice header comprises a second point cloud slice identification field indicating the target point cloud slice; and
when the attribute slice header is added in general attribute data bitstream information related to the target point cloud slice, the attribute slice header is associated with attribute data corresponding to the target point cloud slice; or
when the second point cloud slice identification field indicating the target point cloud slice exists in attribute data corresponding to the target point cloud slice, the attribute slice header is associated with the attribute data.

8. The method according to any one of claims 1 to 7, wherein the M point cloud slices in the point cloud frame are encapsulated in T point cloud slice tracks, T being a positive integer; the T point cloud slice tracks comprise a point cloud slice track Tᵢ, i being a positive integer less than or equal to T; and
the media file resource comprises a point cloud slice track sample entry corresponding to the point cloud slice track Tᵢ, and the point cloud slice track sample entry indicates point cloud slice encapsulation information comprised in the point cloud slice track Tᵢ.

9. The method according to claim 8, wherein the point cloud slice track sample entry comprises a point cloud slice information dynamic identification field, a track point cloud slice maximum number indication field, and a third point cloud slice identification field; the point cloud slice information dynamic identification field indicates change status of the point cloud slice encapsulation information in the point cloud slice track Tᵢ; the track point cloud slice maximum number indication field indicates a number of point cloud slices comprised in a maximum number sample in the point cloud slice track Tᵢ, the maximum number sample is a sample with a maximum number of point cloud slices comprised in the point cloud slice track Tᵢ, and a value of the track point cloud slice maximum number indication field is N1, N1 being a positive integer; the third point cloud slice identification field indicates an identifier of a point cloud slice comprised in each sample in the point cloud slice track Tᵢ; and
when a value of the point cloud slice information dynamic identification field is a third flag value, the change status of the point cloud slice encapsulation information is a static state, and N1 point cloud slices exist in each sample in the point cloud slice track Tᵢ; or
when a value of the point cloud slice information dynamic identification field is a fourth flag value, the change status of the point cloud slice encapsulation information is a dynamic state, and at most N1 point cloud slices exist in each sample in the point cloud slice track Tᵢ.

10. The method according to claim 9, wherein when the change status of the point cloud slice encapsulation information is the dynamic state, the media file resource further comprises a point cloud slice information sample group entry corresponding to the point cloud slice track Tᵢ, the point cloud slice information sample group entry comprises a point cloud slice presence identification field, and the point cloud slice presence identification field indicates presence or absence of a point cloud slice in a sample of the point cloud slice track Tᵢ;
when the point cloud bitstream comprises S point cloud frames, the point cloud slice track Tᵢ comprises S samples, S being a positive integer; the S samples comprise a sample Sⱼ, j being a positive integer less than or equal to S; and
when a value of a point cloud slice presence identification field corresponding to the sample Sⱼ is a fifth flag value, the sample Sⱼ belongs to a first sample group, a point cloud slice exists in each sample comprised in the first sample group, and point cloud slice encapsulation information comprised in each sample in the first sample group is indicated by a subsample information data box; or
when a value of a point cloud slice presence identification field corresponding to the sample Sⱼ is a sixth flag value, the sample Sⱼ belongs to a second sample group, and no point cloud slice exists in each sample comprised in the second sample group.

11. The method according to claim 8, wherein the point cloud slice track sample entry comprises a point cloud slice information dynamic identification field, and the point cloud slice information dynamic identification field indicates change status of the point cloud slice encapsulation information in the point cloud slice track Tᵢ;
when a value of the point cloud slice information dynamic identification field is a third flag value, the change status of the point cloud slice encapsulation information is a static state; and
a point cloud slice track sample entry indicating static point cloud slice encapsulation information further comprises a first track point cloud slice number indication field and a fourth point cloud slice identification field; the first track point cloud slice number indication field indicates a number of point cloud slices comprised in each sample in the point cloud slice track Tᵢ, and when a value of the first track point cloud slice number indication field is K1, K1 point cloud slices exist in each sample in the point cloud slice track Tᵢ, K1 being a positive integer; and the fourth point cloud slice identification field indicates an identifier of a point cloud slice comprised in each sample in the point cloud slice track Tᵢ.

12. The method according to claim 11, wherein when a value of the point cloud slice information dynamic identification field is a fourth flag value, the change status of the point cloud slice encapsulation information is a dynamic state; the dynamic state indicates that samples in the point cloud slice track Tᵢ comprise not exactly the same numbers of point cloud slices;
the media file resource further comprises a point cloud slice information sample group entry indicating dynamic point cloud slice encapsulation information, and the point cloud slice information sample group entry comprises a second track point cloud slice number indication field and a fifth point cloud slice identification field;
when the point cloud bitstream comprises S point cloud frames, the point cloud slice track Tᵢ comprises S samples, S being a positive integer; the S samples comprise a sample Sⱼ, j being a positive integer less than or equal to S;
the second track point cloud slice number indication field indicates a number of point cloud slices comprised in the sample Sⱼ in the point cloud slice track Tᵢ; and
when the number of the point cloud slices comprised in the sample Sⱼ is greater than 0, the fifth point cloud slice identification field indicates an identifier of a point cloud slice comprised in the sample Sⱼ.

13. The method according to any one of claims 1 to 12, wherein the M point cloud slices in the point cloud frame are classified into H point cloud tiles, H being a positive integer less than or equal to M; the H point cloud tiles are encapsulated in G point cloud tile tracks, G being a positive integer; the G point cloud tile tracks comprise a point cloud tile track Gₚ, p being a positive integer less than or equal to G; and
the media file resource comprises a point cloud tile track sample entry corresponding to the point cloud tile track Gₚ, and the point cloud tile track sample entry indicates point cloud tile encapsulation information comprised in the point cloud tile track Gₚ.

14. The method according to claim 13, wherein the point cloud tile track sample entry comprises a point cloud tile information dynamic identification field, a track point cloud tile maximum number indication field, and a first point cloud tile identification field; the point cloud tile information dynamic identification field indicates change status of the point cloud tile encapsulation information in the point cloud tile track Gₚ; the track point cloud tile maximum number indication field indicates a number of point cloud tiles comprised in a maximum number sample in the point cloud tile track Gₚ, the maximum number sample is a sample with a maximum number of point cloud tiles comprised in the point cloud tile track Gₚ, and a value of the track point cloud tile maximum number indication field is N2, N2 being a positive integer; the first point cloud tile identification field indicates an identifier of a point cloud tile comprised in each sample in the point cloud tile track Gₚ; and
when a value of the point cloud tile information dynamic identification field is a seventh flag value, the change status of the point cloud tile encapsulation information is a static state, and N2 point cloud tiles exist in each sample in the point cloud tile track Gₚ; or
when a value of the point cloud tile information dynamic identification field is an eighth flag value, the change status of the point cloud tile encapsulation information is a dynamic state, and at most N2 point cloud tiles exist in each sample in the point cloud tile track Gₚ.

15. The method according to claim 14, wherein when the change status of the point cloud tile encapsulation information is the dynamic state, the media file resource further comprises a point cloud tile information sample group entry corresponding to the point cloud tile track Gₚ, the point cloud tile information sample group entry comprises a point cloud tile presence identification field, and the point cloud tile presence identification field indicates presence or absence of a point cloud tile in a sample of the point cloud tile track Gₚ;
when the point cloud bitstream comprises S point cloud frames, the point cloud tile track Gₚ comprises S samples, S being a positive integer; the S samples comprise a sample Sⱼ, j being a positive integer less than or equal to S; and
when a value of a point cloud tile presence identification field corresponding to the sample Sⱼ is a ninth flag value, the sample Sⱼ belongs to a third sample group, a point cloud tile exists in each sample comprised in the third sample group, and point cloud tile encapsulation information comprised in each sample in the third sample group is indicated by a subsample information data box; or
when a value of a point cloud tile presence identification field corresponding to the sample Sⱼ is a tenth flag value, the sample Sⱼ belongs to a fourth sample group, and no point cloud tile exists in each sample comprised in the fourth sample group.

16. The method according to claim 13, wherein the point cloud tile track sample entry comprises a point cloud tile information dynamic identification field, and the point cloud tile information dynamic identification field indicates change status of the point cloud tile encapsulation information in the point cloud tile track Gₚ;
when a value of the point cloud tile information dynamic identification field is a seventh flag value, the change status of the point cloud tile encapsulation information is a static state; and
a point cloud tile track sample entry indicating static point cloud tile encapsulation information further comprises a first track point cloud tile number indication field and a second point cloud tile identification field; the first track point cloud tile number indication field indicates a number of point cloud tiles comprised in each sample in the point cloud tile track Gₚ, and when a value of the first track point cloud tile number indication field is K2, K2 point cloud tiles exist in each sample in the point cloud tile track Gₚ, K2 being a positive integer; and the second point cloud tile identification field indicates an identifier of a point cloud tile comprised in each sample in the point cloud tile track Gₚ.

17. The method according to claim 16, wherein when a value of the point cloud tile information dynamic identification field is an eighth flag value, the change status of the point cloud tile encapsulation information is a dynamic state; the dynamic state indicates that samples in the point cloud tile track Gₚ comprise not exactly the same numbers of point cloud tiles;
the media file resource further comprises a point cloud tile information sample group entry indicating dynamic point cloud tile encapsulation information, and the point cloud tile information sample group entry comprises a second track point cloud tile number indication field and a third point cloud tile identification field;
when the point cloud bitstream comprises S point cloud frames, the point cloud tile track Gₚ comprises S samples, S being a positive integer; the S samples comprise a sample Sⱼ, j being a positive integer less than or equal to S;
the second track point cloud tile number indication field indicates a number of point cloud tiles comprised in the sample Sⱼ in the point cloud tile track Gₚ; and
when the number of the point cloud tiles comprised in the sample Sⱼ is greater than 0, the third point cloud tile identification field indicates an identifier of a point cloud tile comprised in the sample Sⱼ.

18. The method according to claim 10, wherein the subsample information data box comprises a component data indication field; and when component data of a target point cloud slice exists in a subsample of the point cloud slice track Tᵢ, the component data indication field indicates a data volume of the component data comprised in the subsample, the target point cloud slice belonging to the M point cloud slices, and the target point cloud slice being encapsulated in the point cloud slice track Tᵢ; and
when a value of the component data indication field is a first field value, the subsample comprises all of the component data of the target point cloud slice; or
when a value of the component data indication field is a second field value, the subsample comprises a part of the component data of the target point cloud slice.

19. The method according to claim 10, wherein when a component information data box exists in the point cloud slice track Tᵢ, a subsample of the point cloud slice track Tᵢ comprises component data corresponding to the component information data box; or
when no component information data box exists in the point cloud slice track Tᵢ, a subsample of the point cloud slice track Tᵢ comprises all component data of a target point cloud slice, the target point cloud slice belonging to the M point cloud slices, and the target point cloud slice being encapsulated in the point cloud slice track Tᵢ.

20. The method according to claim 8, wherein the obtaining a media file resource of immersive media comprises:
receiving a signaling message transmitted by a server, the signaling message being generated by the server based on the point cloud slice encapsulation information comprised in the point cloud slice track Tᵢ, the signaling message comprising a point cloud slice identifier list corresponding to the point cloud slice track Tᵢ, and the point cloud slice identifier list comprising an identifier of a point cloud slice comprised in the point cloud slice track Tᵢ, and the point cloud slice identifier list being configured for being added to a separate point cloud slice identifier descriptor or to a component descriptor related to the point cloud slice track Tᵢ; and
requesting the media file resource of the immersive media based on the signaling message, the media file resource comprising data streams corresponding to W point cloud slice tracks, and W being a positive integer less than or equal to T.

21. The method according to claim 20, wherein the W point cloud slice tracks comprise the point cloud slice track Tᵢ; and
the decoding the point cloud bitstream based on the point cloud slice indication information comprises:
parsing metadata information carried by the media file resource, the metadata information comprising the point cloud slice encapsulation information comprised in the point cloud slice track Tᵢ;
determining, based on the point cloud slice encapsulation information, a to-be-decoded point cloud slice from a point cloud slice comprised in the point cloud slice track Tᵢ; and
decoding the to-be-decoded point cloud slice based on point cloud slice indication information related to the to-be-decoded point cloud slice.

22. The method according to claim 21, wherein the determining, based on the point cloud slice encapsulation information, a to-be-decoded point cloud slice from a point cloud slice comprised in the point cloud slice track Tᵢ comprises:
skipping, when the point cloud slice encapsulation information indicates that a target sample in the point cloud slice track Tᵢ does not comprise a point cloud slice, decoding the target sample, and determining the to-be-decoded point cloud slice from a sample other than the target sample.

23. An immersive media data processing method, comprising:
encoding point cloud data to obtain a point cloud bitstream, the point cloud bitstream comprising a plurality of point cloud frames and point cloud slice indication information, the point cloud slice indication information indicating each of M point cloud slices comprised in a point cloud frame, and M being a positive integer; and
encapsulating the point cloud bitstream based on the point cloud slice indication information into a media file resource of immersive media.

24. The method according to claim 23, wherein the M point cloud slices in the point cloud frame are encapsulated in T point cloud slice tracks, T being a positive integer; the T point cloud slice tracks comprise a point cloud slice track Tᵢ, i being a positive integer less than or equal to T; and
the encapsulating the point cloud bitstream based on the point cloud slice indication information into a media file resource of immersive media comprises:
generating point cloud slice encapsulation information corresponding to the point cloud slice track Tᵢ based on point cloud slice indication information related to a point cloud slice comprised in the point cloud slice track Tᵢ, the point cloud slice encapsulation information belonging to metadata information related to the point cloud bitstream; and
encapsulating the metadata information and the T point cloud slice tracks into the media file resource of the immersive media.

25. An immersive media data processing apparatus, comprising:
a decapsulation module, configured to obtain a media file resource of immersive media, and decapsulate the media file resource to obtain a point cloud bitstream, the point cloud bitstream comprising a plurality of point cloud frames and point cloud slice indication information, the point cloud slice indication information indicating each of M point cloud slices comprised in a point cloud frame, and M being a positive integer; and
a decoding module, configured to decode the point cloud bitstream based on the point cloud slice indication information.

26. An immersive media data processing apparatus, comprising:
an encoding module, configured to encode point cloud data to obtain a point cloud bitstream, the point cloud bitstream comprising a plurality of point cloud frames and point cloud slice indication information, the point cloud slice indication information indicating each of M point cloud slices comprised in a point cloud frame, and M being a positive integer; and
an encapsulation module, configured to encapsulate the point cloud bitstream based on the point cloud slice indication information into a media file resource of immersive media.

27. A computer device, comprising: a processor and a memory,
the processor being connected to the memory, the memory being configured to store a computer program, and the processor being configured to call the computer program, to enable the computer device to perform the method according to any one of claims 1 to 24.

28. A computer-readable storage medium, the computer-readable storage medium storing a computer program, and the computer program being adapted to be loaded and executed by a processor, to enable a computer device with the processor to perform the method according to any one of claims 1 to 24.

29. A computer program product, comprising computer-executable instructions or a computer program, the computer-executable instructions or the computer program being executed by a processor to implement the method according to any one of claims 1 to 24.
